# EUROPEAN PATENT APPLICATION

(11) **EP 4 814 474 A1**
(43) Date of publication of application: **30.09.2026**
(21) Application number: 24907159.8
(22) Date of filing: 04.12.2024
(51) Int. Cl.: G01N 21/27, G06T 7/00

(54) **TURBIDITY DETERMINATION DEVICE**

(30) Priority: 20.12.2023 JP 2023215098
(71) Applicant: DAIKIN INDUSTRIES, LTD., Osaka-shi, Osaka 530-0001 (JP)
(72) Inventor: SEIKE, Hikaru, Osaka-shi, Osaka 530-0001 (JP); AYADO, Kenji, Osaka-shi, Osaka 530-0001 (JP)
(74) Representative: Hoffmann Eitle
(86) International application number: PCT/JP2024/042867
(87) International publication number: WO 2025/134772

(57) **Abstract**

A turbidity determination device (10) for determining turbidity of hydraulic oil includes an imaging target member (40), an imager (35), and a determiner (25). The imaging target member (40) forms a bright section and a dark section. The imager (35) is spaced apart from the imaging target member (40) with the hydraulic oil present therebetween. The imager (35) obtains an image of the imaging target member (40) as a determination image. The determiner (25) determines a degree of turbidity of the hydraulic oil based on an intensity difference between the bright section and the dark section in the determination image.

## Description

### TECHNICAL FIELD

The present disclosure relates to a turbidity determination device and a turbidity determination system that determine the degree of turbidity of hydraulic oil.

### BACKGROUND ART

For example, hydraulic oil is used to operate hydraulic equipment such as a hydraulic cylinder provided in a machine tool. The hydraulic oil is gradually degraded by contamination with foreign matters, oxidation, or other causes. A device for determining the condition of hydraulic oil is typically known. Patent Document 1 discloses a device for determining the degradation of hydraulic oil.

### CITATION LIST

### PATENT DOCUMENT

Patent Document 1: International Patent Publication No. WO 2015/060457

### SUMMARY OF THE INVENTION

### TECHNICAL PROBLEMS

Most typical devices for determining the condition of hydraulic oil require an inspection sample of the hydraulic oil taken out of hydraulic equipment and set in the device, and are thus inconvenient.

It is an object of the present disclosure to provide a convenient turbidity determination device for determining the turbidity of hydraulic oil.

### SOLUTION TO THE PROBLEMS

A first aspect of the present disclosure is directed to a turbidity determination device (10) for determining turbidity of hydraulic oil of hydraulic equipment. The turbidity determination device includes: an imaging target member (40) that forms a bright section (51) and a dark section (52); an imager (35) spaced apart from the imaging target member (40) so that the hydraulic oil is present therebetween, and configured to obtain an image of the imaging target member (40) as a determination image (50); and a determiner (25) configured to perform a turbidity determination operation of determining a degree of turbidity of the hydraulic oil based on an intensity difference between the bright section (51) and the dark section (52) in the determination image (50) obtained by the imager (35).

In the first aspect, the imager (35) obtains the image of the imaging target member (40) as the determination image (50). The hydraulic oil subjected to the turbidity determination is present between the imager (35) and the imaging target member (40). The intensity difference between the bright section (51) and the dark section (52) in the determination image (50) varies depending on the degree of turbidity of the hydraulic oil present between the imager (35) and the imaging target member (40). The determiner (25) thus determines the degree of turbidity of the hydraulic oil based on the intensity difference between the bright section (51) and the dark section (52) in the determination image (50).

The turbidity determination device (10) according to the first aspect can determine the degree of turbidity of the hydraulic oil as long as the hydraulic oil subjected to the turbidity determination is present between the imager (35) and the imaging target member (40). With the use of this turbidity determination device (10), the degree of turbidity of the hydraulic oil can be determined without taking an inspection sample of the hydraulic oil out of the hydraulic equipment.

A second aspect of the present disclosure is an embodiment of the first aspect. In the second aspect, in the turbidity determination operation, the determiner (25) determines that the hydraulic oil has a higher degree of turbidity as the intensity difference between the bright section (51) and the dark section (52) in the determination image (50) decreases.

With an increase in the degree of turbidity of the hydraulic oil, the intensity difference between the bright section (51) and the dark section (52) in the determination image (50) decreases. Based on the characteristic, the determiner (25) according to the second aspect determines the degree of turbidity of the hydraulic oil.

A third aspect of the present disclosure is an embodiment of the first or second aspect. In the third aspect, the turbidity determination operation is an operation of determining, by the determiner (25), the degree of turbidity of the hydraulic oil by comparing the intensity difference between the bright section (51) and the dark section (52) in the determination image (50) with a reference intensity difference.

In the third aspect, the determiner (25) determines the degree of turbidity of the hydraulic oil by comparing the intensity difference between the bright section (51) and the dark section (52) in the determination image (50) with the reference intensity difference.

A fourth aspect of the present disclosure is an embodiment of the third aspect. In the fourth aspect, the reference intensity difference is the intensity difference between the bright section (51) and the dark section (52) in the determination image (50) obtained by the imager (35) in a state where the hydraulic oil without turbidity is present between the imaging target member (40) and the imager (35).

In the fourth aspect, the determiner (25) uses, as the reference intensity difference, the intensity difference between the bright section (51) and the dark section (52) when the hydraulic oil present between the imaging target member (40) and the imager (35) has no turbidity.

A fifth aspect of the present disclosure is an embodiment of the third or fourth aspect. In the fifth aspect, the determiner (25): performs a color determination operation of determining a color of the hydraulic oil based on the determination image (50); and compares, in the turbidity determination operation, the reference intensity difference corresponding to the color of the hydraulic oil determined in the color determination operation with the intensity difference between the bright section (51) and the dark section (52) in the determination image (50).

The determiner (25) according to the fifth aspect determines the color of the hydraulic oil in the color determination operation. In the turbidity determination operation, the determiner (25) compares the reference intensity difference corresponding to the color of the hydraulic oil with the intensity difference between the bright section (51) and the dark section (52) in the determination image (50) obtained by the imager (35). Even when the color of the hydraulic oil changes in the use of the hydraulic oil, the determiner (25) can determine the degree of turbidity of the hydraulic oil properly.

A sixth aspect of the present disclosure is an embodiment of the fifth aspect. In the sixth aspect, a part of the determination image (50) including only the bright section (51) is a first region (56), and the color determination operation is an operation of determining, by the determiner (25), the color of the hydraulic oil based on the first region (56) of the determination image (50).

In the sixth aspect, the determiner (25) determines the color of the hydraulic oil based on the first region (56) that is a part of the determination image (50) and includes only the bright section (51).

A seventh aspect of the present disclosure is an embodiment of any one of the first to sixth aspects. In the seventh aspect, the imaging target member (40) forms a plurality of bright sections (51), each bright section (51) identical to the bright section (51), and a plurality of dark sections (52), each dark section (52) identical to the dark section (52), a region of the determination image (50) including the plurality of bright sections (51) and the plurality of dark sections (52) is a second region (57), and in the turbidity determination operation, the determiner (25) determines the degree of turbidity of the hydraulic oil based on a difference between a maximum value of intensity values of the plurality of bright sections (51) and a minimum value of intensity values of the plurality of dark sections (52) in the second region (57).

In the seventh aspect, the second region (57) of the determination image (50) includes the plurality of bright sections (51) and the plurality of dark sections (52). The determiner (25) determines the degree of turbidity of the hydraulic oil based on the difference between the "maximum value of intensity values of the plurality of bright sections (51)" and the "minimum value of intensity values of the plurality of dark sections (52)" in the second region (57).

An eighth aspect of the present disclosure is an embodiment of any one of the first to sixth aspects. In the eighth aspect, the determiner (25) performs a cause determination operation of determining a cause of the turbidity of the hydraulic oil.

In the eighth aspect, the determiner (25) determines the cause of the turbidity of the hydraulic oil.

A ninth aspect of the present disclosure is an embodiment of the eighth aspect. In the ninth aspect, a region of the determination image (50) including both the bright section (51) and the dark section (52) is a second region (57), and the cause determination operation is an operation of determining, by the determiner (25), the cause of the turbidity of the hydraulic oil based on an average value of intensity values in the second region (57) of the determination image (50).

In the ninth aspect, the second region (57) of the determination image (50) includes both the bright section (51) and the dark section (52). The cause determination operation is an operation of determining, by the determiner (25), the cause of the turbidity of the hydraulic oil based on the average value of the intensity values in the second region (57).

A tenth aspect of the present disclosure is an embodiment of the ninth aspect. In the tenth aspect, the imaging target member (40) has a plurality of bright sections (51), each bright section (51) identical to the bright section (51), and a plurality of dark sections (52), each dark section (52) identical to the dark section (52), and the second region (57) is a region of the determination image (50) including one or more of the plurality of bright sections (51) and one or more of the plurality of dark sections (52).

In the tenth aspect, the second region (57) of the determination image (50) includes the plurality of bright sections (51) and the plurality of dark sections (52).

An eleventh aspect of the present disclosure is an embodiment of the ninth or tenth aspect. In the eleventh aspect, the cause determination operation is an operation of determining, by the determiner (25), the cause of the turbidity of the hydraulic oil by comparing the average of the intensity values in the second region (57) of the determination image (50) with a reference intensity value.

The determiner (25) according to the eleventh aspect determines the cause of the turbidity of the hydraulic oil by comparing the average value of the intensity values in the second region (57) of the determination image (50) with the reference intensity value in the cause determination operation.

A twelfth aspect of the present disclosure is an embodiment of the eleventh aspect. In the twelfth aspect, the reference intensity value is an intensity value of the bright section (51) in the determination image (50) obtained by the imager (35) in a state where the hydraulic oil without turbidity is present between the imaging target member (40) and the imager (35).

In the twelfth aspect, the determiner (25) uses, as the reference intensity value, the intensity value of the bright section (51) when the hydraulic oil present between the imaging target member (40) and the imager (35) has no turbidity.

A thirteenth aspect of the present disclosure is an embodiment of the eleventh or twelfth aspect. In the thirteenth aspect, in the cause determination operation, the determiner (25) determines that the cause of the turbidity of the hydraulic oil is contamination of the hydraulic oil with water, when the average value of the intensity values in the second region (57) of the determination image (50) is greater than the reference intensity value.

The determiner (25) according to the thirteenth aspect determines, in the cause determination operation, that the cause of the turbidity of the hydraulic oil is the contamination of the hydraulic oil with water, when the average value of the intensity values in the second region (57) of the determination image (50) is closer to the intensity value indicating "white" than the reference intensity value.

A fourteenth aspect of the present disclosure is an embodiment of any one of the eleventh to thirteenth aspects. In the fourteenth aspect, in the cause determination operation, the determiner (25) determines that the cause of the turbidity of the hydraulic oil is contamination of the hydraulic oil with solid particles when the average value of the intensity values in the second region of the determination image (50) is smaller than the reference intensity value.

The determiner (25) according to the fourteenth aspect determines, in the cause determination operation, that the cause of the turbidity of the hydraulic oil is the contamination of the hydraulic oil with the solid particles (e.g., particles of sludge), when the average value of the intensity values in the second region (57) of the determination image (50) is closer to the intensity value indicating "black" than the reference intensity value.

A fifteenth aspect of the present disclosure is an embodiment of any one of the first to fourteenth aspects. In the fifteenth aspect, the imaging target member (40) has a through hole (43) open in a surface facing the imager (35), a section of the imaging target member (40) other than the through hole (43) forms the bright section (51), and the through hole (43) forms the dark section (52).

The imaging target member (40) according to the fifteenth aspect has the through hole (43). The section of the imaging target member (40) other than the through hole (43) reflects light and thus forms the bright section (51). The through hole (43) of the imaging target member (40) reflects no light and thus forms the dark section (52).

A sixteenth aspect of the present disclosure is an embodiment of the fifteenth aspect. In the sixteenth aspect, the imaging target member (40) has a plurality of through holes (43), each through hole (43) identical to the through hole.

The imaging target member (40) of the sixteenth aspect has the plurality of through holes (43). The imaging target member (40) thus forms the plurality of bright sections (51) and the plurality of dark sections (52).

A seventeenth aspect of the present disclosure is an embodiment of the fifteenth or sixteenth aspect. In the seventeenth aspect, the imaging target member (40) is white.

In the seventeenth aspect, the imaging target member (40), which is white, forms the bright section (51).

An eighteenth aspect of the present disclosure is an embodiment of any one of the first to eighteenth aspects. In the eighteenth aspect, the imaging target member (40) is fixed relative to the imager (35).

In the eighteenth aspect, a constant distance is kept between the imaging target member (40) and the imager (35).

A nineteenth aspect of the present disclosure is an embodiment of the eighteenth aspect. In the nineteenth aspect, the turbidity determination device further includes: a mesh-shaped partition member (31) surrounding a space (32) between the imaging target member (40) and the imager (35).

In the nineteenth aspect, the space (32) between the imaging target member (40) and the imager (35) is surrounded by the partition member (31). The partition member (31) is in the mesh shape. The partition member (31) can thus reduce foreign objects entering the space (32) between the imaging target member (40) and the imager (35), while allowing the hydraulic oil to flow into the space (32) between the imaging target member (40) and the imager (35).

A twentieth aspect of the present disclosure is an embodiment of any one of the first to fourteenth aspects. In the twentieth aspect, the turbidity determination device further includes: an intermediate member (73) disposed between the imaging target member (40) and the imager (35), made of a clear material, and having therein an oil passage (74) through which the hydraulic oil flows.

In the twentieth aspect, the intermediate member (73) is provided between the imaging target member (40) and the imager (35). With the hydraulic oil flowing through the oil passage (74) of the intermediate member (73), the hydraulic oil subjected to the turbidity determination is present between the imager (35) and the imaging target member (40). In this state, the imager (35) obtains an image of the imaging target member (40) as a determination image (50).

In the twentieth aspect, the hydraulic oil subjected to the turbidity determination flows through the oil passage (74) inside the intermediate member (73). In this aspect, the hydraulic oil is in contact with neither the imaging target member (40) nor the imager (35). The foreign matters contained in the hydraulic oil thus adhere to neither the imaging target member (40) nor the imager (35).

A twenty-first aspect of the present disclosure is an embodiment of the twentieth aspect. In the twenty-first aspect, the intermediate member (73) has a first side surface (73a) and a second side surface (73b), each of the first side surface (73a) and the second side surface (73b) is a flat surface, the first side surface (73a) and the second side surface (73b) are parallel to each other, the intermediate member (73) has the oil passage (74) between the first side surface (73a) and the second side surface (73b), the imaging target member (40) is in contact with the first side surface (73a) of the intermediate member (73), and the imager (35) is opposed to the second side surface (73b) of the intermediate member (73).

In the twenty-first aspect, the first side surface (73a) of the intermediate member (73) in contact with the imaging target member (40) is a flat surface. The imager (35) is opposed to the second side surface (73b) of the intermediate member (73), and obtains the image of the imaging target member (40) on the other side of the intermediate member (73) as the determination image (50). The second side surface (73b) of the intermediate member (73) is a flat surface parallel to the first side surface (73a). The imager (35) can thus obtain the image of the imaging target member (40) with relatively small distortion as the determination image (50).

A twenty-second aspect of the present disclosure is an embodiment of the twentieth or twenty-first aspect. In the twenty-second aspect, the turbidity determination device further includes: a first joint member (75a) communicating with one end of the oil passage (74) and connected to an oil pipe (63) through which the hydraulic oil flows; and a second joint member (75b) communicating with the other end of the oil passage (74) and connected to the oil pipe (63).

In the twenty-second aspect, the oil passage (74) in the intermediate member (73) communicates with the oil pipe (63) via the first joint member (75a) and the second joint member (75b). The hydraulic oil flowing through the oil pipe (63) thus passes through the oil passage (74) of the intermediate member (73).

A twenty-third aspect of the present disclosure is an embodiment of any one of the twentieth to twenty-second aspects. In the twenty-third aspect, the turbidity determination device further includes: a case (71) housing the imaging target member (40), the imager (35), and the intermediate member (73).

In the twenty-third aspect, the imaging target member (40), the imager (35), and the intermediate member (73) are arranged inside the case (71).

A twenty-fourth aspect of the present disclosure is an embodiment of the twenty-third aspect. In the twenty-fourth aspect, the turbidity determination device further includes: a light source (36) housed in the case (71) and configured to emit light, and the case (71) is made of a material that transmits no light.

In the twenty-fourth aspect, the imaging target member (40), the imager (35), the intermediate member (73), and the light source (36) are arranged inside the case (71). The case (71) transmits no light. Inside the case (71), the imager (35) obtains, as the determination image (50), an image of the imaging target member (40) that has received only the light emitted by the light source (36). The imager (35) can thus obtain the image of the imaging target member (40) without being influenced by the light outside the case (71).

A twenty-fifth aspect of the present disclosure is an embodiment of the twenty-fourth aspect. In the twenty-fifth aspect, the oil passage (74) of the intermediate member (73) is a linear passage, the light source (36) includes a first light source (36a) and a second light source (36b), and the first light source (36a), the imager (35), and the second light source (36b) are aligned sequentially in a direction in which the oil passage (74) extends.

In the twenty-fifth aspect, the imager (35) obtains an image of the imaging target member (40) that has received light emitted by the first light source (36a) and the second light source (36b). In this aspect, the first light source (36a), the imager (35), and the second light source (36b) are aligned along the linear oil passage (74). The imager (35) can thus obtain an image of the imaging target member (40) that has received light with a relatively uniform intensity.

A twenty-sixth aspect of the present disclosure is directed to a turbidity determination system (15) for determining turbidity of hydraulic oil of hydraulic equipment. The turbidity determination system includes: an imaging target member (40) that forms a bright section (51) and a dark section (52); an imager (35) spaced apart from the imaging target member (40) so that the hydraulic oil is present therebetween, and configured to obtain an image of the imaging target member (40) as a determination image (50); and a determiner (25) configured to perform a turbidity determination operation of determining a degree of turbidity of the hydraulic oil based on an intensity difference between the bright section (51) and the dark section (52) in the determination image (50) obtained by the imager (35).

In the twenty-sixth aspect, the imager (35) obtains the image of the imaging target member (40) as the determination image (50). The hydraulic oil subjected to the turbidity determination is present between the imager (35) and the imaging target member (40). The intensity difference between the bright section (51) and the dark section (52) in the determination image (50) varies depending on the degree of turbidity of the hydraulic oil present between the imager (35) and the imaging target member (40). The determiner (25) thus determines the degree of turbidity of the hydraulic oil based on the intensity difference between the bright section (51) and the dark section (52) in the determination image (50).

The turbidity determination system (15) of the twenty-sixth aspect can determine the degree of turbidity of the hydraulic oil when the hydraulic oil subjected to the turbidity determination is present between the imager (35) and the imaging target member (40). With the use of this turbidity determination device (10), the degree of turbidity of the hydraulic oil can be determined without taking an inspection sample of the hydraulic oil out of the hydraulic equipment.

### BRIEF DESCRIPTION OF THE DRAWINGS

[FIG. 1] FIG. 1 is a schematic cross-sectional view of a hydraulic oil tank showing the state in which a turbidity determination device according to a first embodiment is installed.
[FIG. 2] FIG. 2 is a schematic front view of the turbidity determination device according to the first embodiment.
[FIG. 3] FIG. 3 is a schematic cross-sectional view of a main part of the turbidity determination device according to the first embodiment.
[FIG. 4] FIG. 4 is a plan view of an imaging target member of the turbidity determination device according to the first embodiment.
[FIG. 5] FIG. 5 is a perspective view of the imaging target member of the turbidity determination device according to the first embodiment.
[FIG. 6] FIG. 6 is a block diagram showing a configuration of a determiner of the turbidity determination device according to the first embodiment.
[FIG. 7] FIG. 7 is an example determination image obtained by a camera of the turbidity determination device according to the first embodiment.
[FIG. 8] FIG. 8 is an example determination image showing first regions.
[FIG. 9] FIG. 9 is an example determination image showing a second region.
[FIG. 10] FIG. 10 is a graph showing intensity values of the second region of the determination image where the hydraulic oil has no turbidity.
[FIG. 11] FIG. 11 shows levels of a reference intensity difference ΔVC_r.
[FIG. 12] FIG. 12 is a flowchart showing an operation of the determiner of the turbidity determination device according to the first embodiment.
[FIG. 13] FIG. 13 is a perspective view of an imaging target member according to a second variation of the first embodiment.
[FIG. 14] FIG. 14 is a perspective view of an imaging target member according to a third variation of the first embodiment.
[FIG. 15] FIG. 15 is a perspective view of an imaging target member according to a fourth variation of the first embodiment.
[FIG. 16] FIG. 16 is a schematic cross-sectional view of a hydraulic oil tank showing the state in which a turbidity determination device according to a second embodiment is installed.
[FIG. 17] FIG. 17 is a cross-sectional view of an imaging unit according to the second embodiment, and shows a cross section taken along line XVII-XVII in FIG. 18.
[FIG. 18] FIG. 18 is a cross-sectional view of the imaging unit according to the second embodiment, and shows a cross section taken along line XVIII-XVIII in FIG. 17.
[FIG. 19] FIG. 19 is a cross-sectional view of the imaging unit according to the second embodiment, and shows a cross section taken along line XIX-XIX in FIG. 18.
[FIG. 20] FIG. 20 is a cross-sectional view of the imaging unit according to the second embodiment, and shows a cross section taken along line XX-XX in FIG. 18.
[FIG. 21] FIG. 21 is a plan view of an imaging target member of a turbidity determination device according to the second embodiment.
[FIG. 22] FIG. 22 is a determination image by the turbidity determination device according to the second embodiment.
[FIG. 23] FIG. 23 is a determination image by the turbidity determination device according to the second embodiment.
[FIG. 24] FIG. 24 is a cross-sectional view of an imaging unit according to a first variation of the second embodiment, and shows a cross section corresponding to FIG. 18.
[FIG. 25] FIG. 25 is a plan view of an imaging target member according to a second variation of the second embodiment.
[FIG. 26] FIG. 26 is a plan view of the imaging target member according to the second variation of the second embodiment.
[FIG. 27] FIG. 27 is a schematic plan view of an imaging unit showing a configuration of a turbidity determination device according to a third variation of the second embodiment.
[FIG. 28] FIG. 28 shows a configuration of a turbidity determination device according to a first variation of another embodiment.

### DESCRIPTION OF EMBODIMENTS

### <<First Embodiment>>

A first embodiment will be described herein. This embodiment is directed to a turbidity determination device (10) that determines the degree of turbidity of hydraulic oil. The turbidity determination device (10) according to this embodiment also serves as a turbidity determination system (15). The turbidity determination device (10) according to this embodiment is provided in a hydraulic oil tank (60) constituting a hydraulic circuit.

### -Hydraulic Oil Tank-

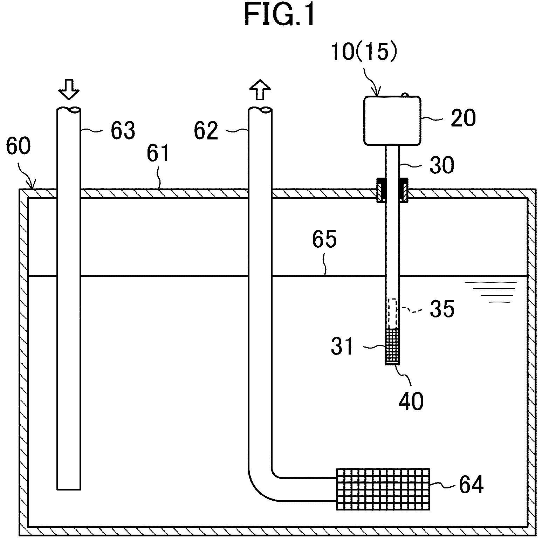

The hydraulic oil tank (60) provided with the turbidity determination device (10) according to this embodiment will be described with reference to FIG. 1.

The hydraulic oil tank (60) includes a tank body (61), a delivery pipe (62), a return pipe (63), and a filter (64). The hydraulic oil tank (60) stores the hydraulic oil. The hydraulic oil stored in the hydraulic oil tank (60) is used to drive hydraulic equipment such as a hydraulic cylinder.

The tank body (61) is a rectangular parallelepiped container. The delivery pipe (62) connects the tank body (61) to a hydraulic pump. The delivery pipe (62) has an inlet end communicating with the internal space of the tank body (61). The filter (64) is connected to the inlet end of the delivery pipe (62). The filter (64) collects solid particles such as sludge contained in the hydraulic oil flowing into the delivery pipe (62). The return pipe (63) introduces the hydraulic oil discharged from the hydraulic equipment into the tank body (61). The return pipe (63) has an outlet end communicating with the internal space of the tank body (61).

### -Configuration of Turbidity Determination Device-

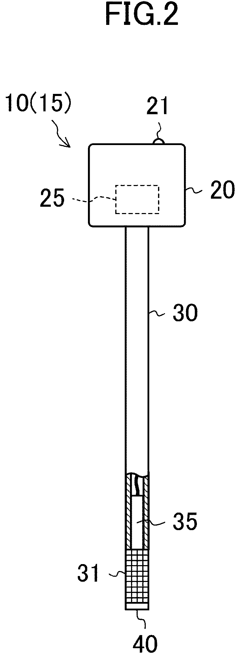

As shown in FIG. 2, the turbidity determination device (10) includes a main unit (20), a sheath pipe (30), a camera (35), a partition member (31), an imaging target member (40), and a determiner (25).

### <Main Unit>

The main unit (20) is a rectangular parallelepiped box-shaped member. The main unit (20) houses the determiner (25). The main unit (20) has a display (21) on the upper surface thereof. This display (21) includes one or more light-emitting diode (LED) lamps.

### <Sheath Pipe>

The sheath pipe (30) is a circular pipe made of metal or resin. The sheath pipe (30) has a proximal end connected to the lower surface of the main unit (20).

### <Camera>

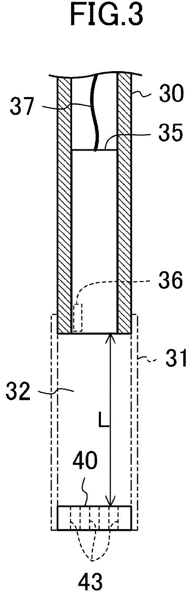

As shown in FIG. 3, the camera (35) has a small cylindrical shape. The camera (35) is provided inside the sheath pipe (30). The camera (35) has a distal end exposed to the outside from the distal end of the sheath pipe (30). The camera (35) obtains color images. The camera (35) is an imager that obtains images of the imaging target member (40).

The camera (35) includes a light source (36). The light source (36) is a white LED lamp. The light source (36) is disposed near the distal end of the camera (35) and emits light forward from the distal end of the camera (35). The camera (35) has a connection cable (37) electrically connected to the determiner (25) in the main unit (20). The camera (35) transmits an image signal through the connection cable (37) to the determiner (25).

### <Partition Member>

The partition member (31) is a cylindrical wire mesh. The partition member (31) has a proximal end attached to the distal end of the sheath pipe (30). The partition member (31) extends forward (downward in FIG. 2) from the distal end of the sheath pipe (30). The partition member (31) has a diameter larger than or equal to that of the sheath pipe (30).

The space inside the partition member (31) serves as a determination space (32). The determination space (32) is surrounded by the partition member (31) which is a cylindrical wire mesh.

### <Imaging Target Member>

The imaging target member (40) is a member shaped in a thick disk as a whole. The imaging target member (40) has a size of about 13 mm, for example. The material of the imaging target member (40) is a white resin.

As shown in FIG. 3, the imaging target member (40) is provided to close the distal end of the partition member (31). The imaging target member (40) is fixed relative to the camera (35) via the partition member (31) and the sheath pipe (30). The imaging target member (40) is immovable relative to the camera (35). The distance L from the camera (35) to the imaging target member (40) is kept constant.

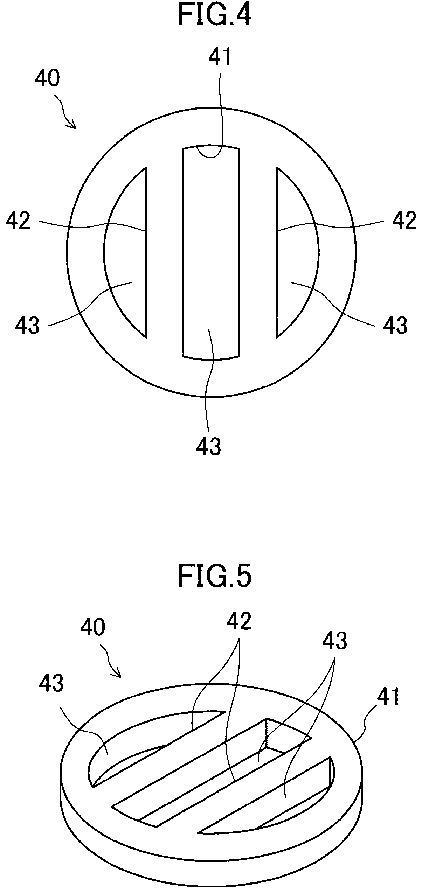

As shown in FIGS. 4 and 5, the imaging target member (40) includes one ring portion (41) and two bridge portions (42). The ring portion (41) is a ring-shaped portion along the outer edge of the imaging target member (40). The bridge portions (42) are each a straight rod-shaped portion across the space inside the ring portion (41). The ring portion (41) and the bridge portions (42) are formed integrally.

In the imaging target member (40), the two bridge portions (42) are arranged substantially parallel to each other at a distance. The space inside the ring portion (41) is divided into three portions by the two bridge portions (42). The three spaces defined by the two bridge portions (42) serve as through holes (43) each penetrating the imaging target member (40) in the thickness direction.

### <Determiner>

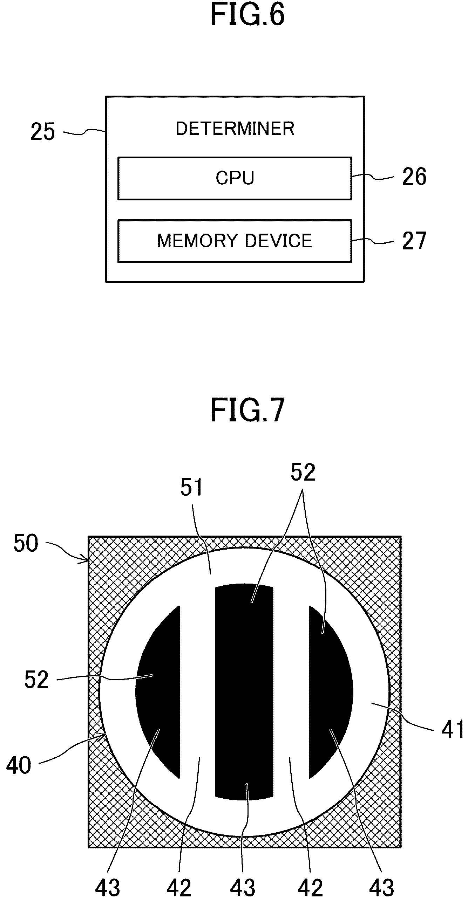

As shown in FIG. 6, the determiner (25) includes a CPU (26) mounted on a substrate, and a memory device (27) storing programs for operating the CPU (26). The memory device (27) is a semiconductor memory.

The CPU (26) executes the programs stored in the memory device (27) to perform a color determination operation, a turbidity determination operation, and a cause determination operation. Details of the color determination operation, the turbidity determination operation, and the cause determination operation will be described later.

### -Installation State of Turbidity Determination Device-

As shown in FIG. 1, the turbidity determination device (10) is provided in the hydraulic oil tank (60). The turbidity determination device (10) is attached to the tank body (61) of the hydraulic oil tank (60) with the sheath pipe (30) extending downward from the main unit (20).

The main unit (20) of the turbidity determination device (10) is located outside the tank body (61). The sheath pipe (30) of the turbidity determination device (10) penetrates the top panel of the tank body (61) and is inserted into the internal space of the tank body (61). The sheath pipe (30) of the turbidity determination device (10) is inserted into, for example, a service port of the hydraulic oil tank (60). The service port is used for attaching an additional return pipe (63) to the hydraulic oil tank (60).

With the turbidity determination device (10) installed in the hydraulic oil tank (60), the distal end of the sheath pipe (30) with a built-in camera (35), and the partition member (31) and the imaging target member (40) fixed to the distal end of the sheath pipe (30) are located below the oil level (65) in the tank body (61). In other words, the distal end of the sheath pipe (30), the partition member (31), and the imaging target member (40) are immersed in the hydraulic oil stored in the hydraulic oil tank (60).

The hydraulic oil in the tank body (61) flows through the wire mesh-shaped partition member (31) into the determination space (32) between the camera (35) and the imaging target member (40). The determination space (32) is filled with the hydraulic oil stored in the hydraulic oil tank (60).

### -Operation of Turbidity Determination Device-

The operation of the turbidity determination device (10) will be described.

In the turbidity determination device (10), the camera (35), which is an imager, obtains an image of the imaging target member (40) as a determination image (50). In the turbidity determination device (10), the determiner (25) performs the color determination operation, the turbidity determination operation, and the cause determination operation based on the determination image (50). The determiner (25) sequentially performs the color determination operation and the turbidity determination operation. The determiner (25) performs the cause determination operation when determining in the turbidity determination operation that the hydraulic oil has a high degree of turbidity (i.e., the hydraulic oil is in bad condition).

### <Determination Image>

As described above, the camera (35) obtains an image of the imaging target member (40) as a determination image (50). The camera (35) transmits the obtained determination image (50) to the determiner (25). The determiner (25) causes the memory device (27) to store the determination image (50) received from the camera (35) as a color image with red (R), green (G), and blue (B) components each having 256 levels. The levels of RGB channels shown here are merely an example.

FIG. 7 shows an example of the determination image (50). The determination image (50) is a planar image of the imaging target member (40).

The light emitted from the light source (36) of the camera (35) is incident on the ring portion (41) and the bridge portions (42) of the imaging target member (40) and is reflected. Accordingly, in the determination image (50), the sections corresponding to the ring portion (41) and the bridge portions (42) of the imaging target member (40) thus serve as bright sections (51) with a relatively high brightness.

On the other hand, the light emitted from the light source (36) of the camera (35) passes through the through holes (43) of the imaging target member (40). Since there is a certain distance or more from the imaging target member (40) to the bottom of the hydraulic oil tank (60), the light passing through the through holes (43) of the imaging target member (40) hardly reaches the bottom of the hydraulic oil tank (60). Accordingly, in the determination image (50), the sections corresponding to the through holes (43) of the imaging target member (40) thus serve as dark sections (52) with a relatively low brightness.

The partition member (31) made of a wire mesh is reflected in a region of the determination image (50) outside the ring portion (41) of the imaging target member (40).

### <Color Determination Operation>

The color determination operation will be described. The color determination operation is the "operation in which the determiner (25) determines the color of the hydraulic oil based on the determination image (50)."

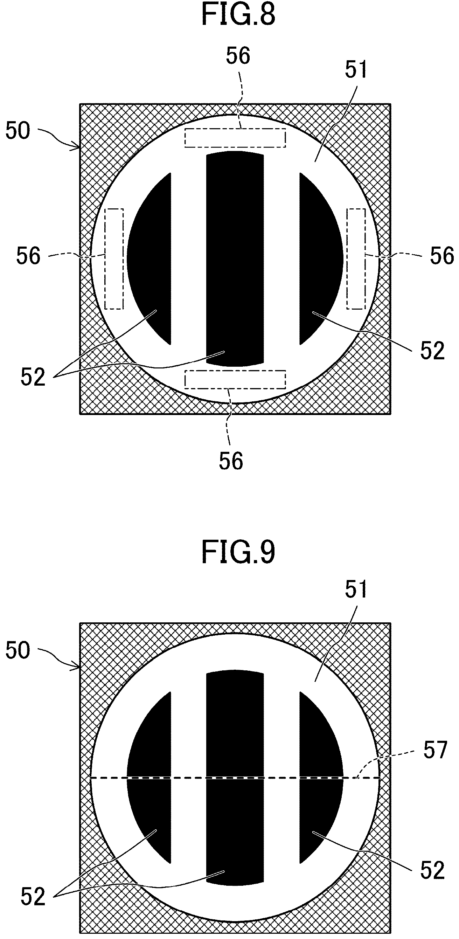

As shown in FIG. 8, the determiner (25) sets four first regions (56) in the determination image (50), which is a color image. The first regions (56) are each a part of the determination image (50) and each include only the bright section (51). Note that the number of the first regions (56) is merely an example and may be one. The determiner (25) sets the first regions (56) in the section of the determination image (50) corresponding to the ring portion (41) of the imaging target member (40). The determiner (25) may however set the first regions (56) in the section of the determination image (50) corresponding to the bridge portions (42) of the imaging target member (40).

The determiner (25) determines the color of the hydraulic oil under the ASTM color standard. The ASTM color standard classifies the color of a petroleum product into 16 levels under the regulations of the ASTM D1500. The determiner (25) according to this embodiment classifies the color of the hydraulic oil into four colors, namely, "clear," "yellow," "golden yellow," and "black." Each of the "clear," "yellow," "golden yellow," and "black" corresponds to one or more grades under the ASTM color standard. The number of the color classifications of the hydraulic oil is merely an example.

The memory device (27) of the determiner (25) stores, in advance, as a color determination reference range, for each of "clear," "yellow," "golden yellow," and "black". Each color determination reference range defines a range of intensity values for each of the R, G, and B channels. Each intensity value is a numerical value indicating one of the 256 gradation levels.

The ring portion (41) and the bridge portions (42) of the imaging target member (40) are white. At the time when the camera (35) obtains the determination image (50), the determination space (32) between the camera (35) and the imaging target member (40) is filled with the hydraulic oil inside the hydraulic oil tank (60). Accordingly, the sections of the determination image (50) corresponding to the ring portion (41) and the bridge portions (42) are substantially in the same color as the hydraulic oil filling the determination space (32).

The determiner (25) calculates the average value of the intensity values of each RGB channel for all the first regions (56). The determiner (25) then compares the calculated average value of the intensity values of each RGB channel for the first regions (56) with the color determination reference range read from the memory device (27), and determines, based on the comparison, which of "clear (n=1)," "yellow (n=2)," "golden yellow (n=3)," and "black (n=4)" the color of the hydraulic oil corresponds to.

### <Reference intensity difference>

As will be described in detail later, in the turbidity determination operation, the determiner (25) determines the degree of turbidity of the hydraulic oil using the reference intensity difference. Here, the reference intensity difference will be described.

The reference intensity difference is determined based on the determination image (50) obtained by the camera (35) when the determination space (32) is filled with the hydraulic oil without turbidity. The reference intensity difference ΔVC_r is the difference between the maximum reference intensity value VC_max (n) and the minimum reference intensity value VC_min (n) in a second region (57) of this determination image (50) (i.e., ΔVC_r = VC_max (n) - VC_min (n)). The second region (57) will be described later. The maximum reference intensity value VC_max (n) and the minimum reference intensity value VC_min (n) for calculating the reference intensity difference are determined in the process of designing the turbidity determination device (10), and are recorded in advance in the memory device (27) of the determiner (25).

As shown in FIG. 9, the second region (57) is a part of the determination image (50). The second region (57) is a linear region substantially orthogonal to the bridge portions (42) of the imaging target member (40). The second region (57) passes through the center of the ring portion (41) of the imaging target member (40).

The second region (57) crosses the ring portion (41), each bridge portion (42), and all the through holes (43). The second region (57) includes two bright sections (51) formed by the ring portion (41), the bright sections (51) each formed by one of the bridge portions (42), and the dark sections (52) each formed by one of the through holes (43). In this manner, the second region (57) includes four bright sections (51) and three dark sections (52). In the second region (57), the bright sections (51) and the dark sections (52) are alternately disposed from one end to the other end thereof.

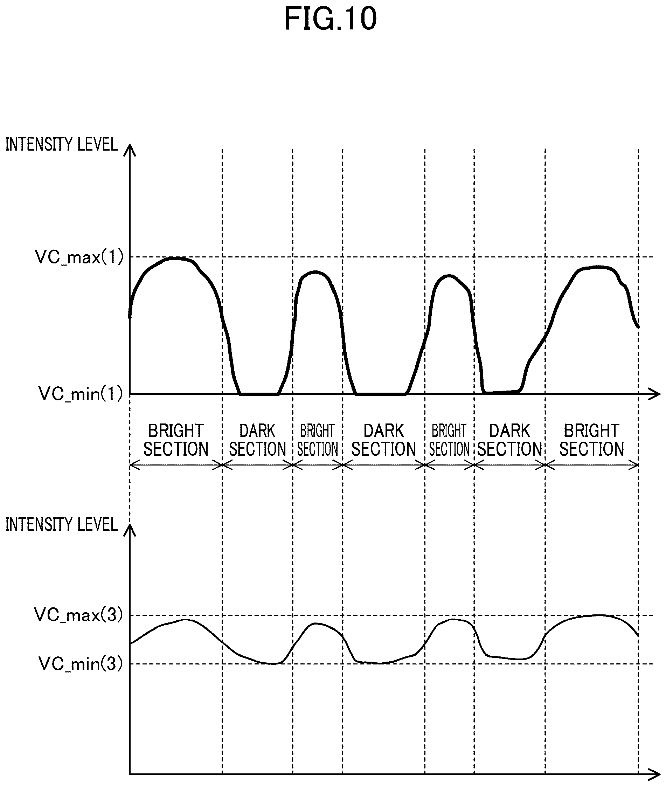

FIG. 10 shows the intensity values of the second region (57) in the determination image (50) converted into a grayscale image with 256 levels. The determination image (50) is obtained by the camera (35) to determine the reference intensity difference in the process of designing the turbidity determination device (10). This determination image (50) is obtained by the camera (35) with the determination space (32) filled with the hydraulic oil without turbidity.

The grayscale levels described above are merely an example. In the grayscale with 256 levels, the color with the smallest intensity value "0" indicates "black", and the color with the greatest intensity value "255" indicates "white." Each intensity value is a value indicating which level of gray is represented on a scale from "0 (black)" to "255 (white)." In the grayscale, the smaller the intensity value, the closer to black the color is, and the greater the intensity value, the closer to white the color is.

As shown in FIG. 10, in the second region (57), the bright sections (51) have a relatively great intensity value, and the dark sections (52) have a relatively small intensity value. The memory device (27) of the determiner (25) stores the maximum value of the intensity values of the bright sections (51) in the second region (57) as the maximum reference intensity value VC_max (n) of the second region (57). The memory device (27) of the determiner (25) stores the minimum value of the intensity values of the dark sections (52) in the second region (57) as the minimum reference intensity value VC_min (n) of the second region (57).

Here, the maximum reference intensity value VC_max (n) and the minimum reference intensity value VC_min (n) of the second region (57) vary in accordance with the color of the hydraulic oil. As the color of the hydraulic oil becomes darker (i.e., closer to black from clear), the difference gradually decreases between the maximum reference intensity value VC_max (n) and the minimum reference intensity value VC_min (n) in the second region (57). In FIG. 10, VC_max (1) and VC_min (1) are the maximum reference intensity value and the minimum reference intensity value, respectively, where the color of the hydraulic oil is "clear (n=1)." On the other hand, VC_max (3) and VC_min (3) are the maximum reference intensity value and the minimum reference intensity value, respectively, where the color of the hydraulic oil is "golden yellow (n=3)."

The memory device (27) of the determiner (25) individually stores the maximum reference intensity value VC_max (n) and the minimum reference intensity value VC_min (n) for each of the cases where the color of the hydraulic oil without turbidity is "clear (n=1)," "yellow (n=2)," "golden yellow (n=3)," and "black (n=4)." The number of "pairs of the reference intensity value VC_max (n) and the minimum reference intensity value VC_min (n)" stored in the memory device (27) of the determiner (25) is equal to the number of classifications of the color of the hydraulic oil in the color determination operation.

### <Turbidity Determination Operation>

The turbidity determination operation will be described. The turbidity determination operation is the "operation in which the determiner (25) determines the degree of turbidity of the hydraulic oil based on the determination image (50)."

In the turbidity determination operation, the determiner (25) reads the maximum reference intensity value VC_max (n) and the minimum reference intensity value VC_min (n) corresponding to the color of the hydraulic oil determined in the color determination operation from the memory device (27). For example, if the color of the hydraulic oil is determined to be "yellow (n=2)" in the color determination operation, the determiner (25) reads the maximum reference intensity value VC_max (2) and the minimum reference intensity value VC_min (2) corresponding to "yellow" from the memory device (27). The determiner (25) refers to the difference between the maximum reference intensity value VC_max (n) and the minimum reference intensity value VC_min (n) read from the memory device (27) as a reference intensity difference ΔVC_r (i.e., ΔVC_r = VC_max (n) - VC_min (n)).

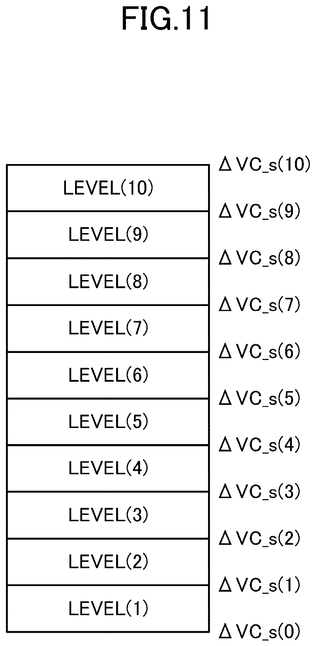

As shown in FIG. 11, the determiner (25) divides the reference intensity difference ΔVC_r into a plurality of levels. Specifically, the determiner (25) equally divides the reference intensity difference ΔVC_r into h stages. "h" is an integer of two or more. The determiner (25) according to this embodiment equally divides the reference intensity difference ΔVC_r into ten levels (h = 10). The determiner (25) calculates a threshold ΔVC_s (m) related to the intensity difference using the following Equation (1). In Equation (1), "m" is an integer ranging from zero to h. $ΔVC_s \left(m\right) = m \times \left(ΔVC_r/h\right)$

The determiner (25) then sets h levels (LEVEL (m)). The levels are within the numerical range represented by the following Expression (2). $ΔVC_s \left(m-1\right) < LEVEL \left(m\right) \leq ΔVC_s \left(m\right)$

In the turbidity determination operation, the determiner (25) converts the determination image (50) from a color image into a grayscale image. The determiner (25) according to this embodiment converts the determination image (50) into a grayscale image with 256 levels.

The grayscale levels described above are merely an example. In the grayscale with 256 levels, the color with the smallest intensity value "0" indicates "black", and the color with the greatest intensity value "255" indicates "white." Each intensity value is a value indicating which level of gray is represented on a scale from "0 (black)" to "255 (white)." In the grayscale, the smaller the intensity value, the closer to black the color is, and the greater the intensity value, the closer to white the color is.

The determiner (25) specifies the maximum intensity value VC1 and the minimum intensity value VC2 of the second region (57) in the determination image (50) converted into the grayscale image. The maximum intensity value VC1 of the second region (57) is the maximum value of the intensity values of the bright sections (51) in the second region (57). The minimum intensity value VC2 of the second region (57) is the minimum value of the intensity values of the dark sections (52) in the second region (57). The determiner (25) calculates the difference between the maximum intensity value VC1 and the minimum intensity value VC2 of the second region (57), and refers to the difference as an intensity difference ΔVC (= VC1 - VC2) between the bright sections (51) and the dark sections (52) in the second region (57).

As described above, in the use of the turbidity determination device (10), the determination space (32) between the camera (35) and the imaging target member (40) is filled with the hydraulic oil stored in the hydraulic oil tank (60). The higher the degree of turbidity of the hydraulic oil filling the determination space (32), the smaller the intensity difference ΔVC (= VC1 - VC2) between the bright sections (51) and the dark sections (52) in the second region (57) of the determination image (50).

The determiner (25) determines to which level shown in FIG. 11 the calculated intensity difference ΔVC (= VC1 - VC2) between the bright sections (51) and the dark sections (52) corresponds. The determiner (25) then determines whether the degree of turbidity of the hydraulic oil corresponds to "substantially no turbidity," "low turbidity," or "high turbidity" in accordance with the level of the intensity difference ΔVC.

An example correspondence between these three levels and the level of the intensity difference ΔVC is shown. If the intensity difference ΔVC is at a level from LEVEL (8) to LEVEL (10), the determiner (25) determines that "the hydraulic oil has substantially no turbidity and is in good condition." If the intensity difference ΔVC is at a level from LEVEL (3) to LEVEL (7), the determiner (25) determines that "the hydraulic oil has a low degree of turbidity and is thus usable." If the intensity difference ΔVC is at a level from LEVEL (1) to LEVEL (2), the determiner (25) determines that "the hydraulic oil has a high degree of turbidity and is thus unusable."

### <Cause Determination Operation>

The determiner (25) performs the cause determination operation when determining that "the hydraulic oil has a high degree of turbidity and is thus unusable." The cause determination operation is "the operation in which the determiner (25) determines the cause of the turbidity of the hydraulic oil based on the determination image (50)."

In the cause determination operation, the determiner (25) calculates the average value VC_ave of the intensity values in the second region (57) of the determination image (50). The determiner (25) sets the maximum reference intensity value VC_max (n) read from the memory device (27) as the reference intensity value of the cause determination operation. The determiner (25) then determines the cause of the turbidity of the hydraulic oil by comparing the calculated average value VC_ave of the intensity values of the second region (57) with the reference intensity value.

If the hydraulic oil is turbid due to the contamination with water, the intensity level of the determination image (50) becomes closer to "white" as a whole with an increase in the degree of turbidity of the hydraulic oil. Accordingly, the intensity level of the second region (57) of the determination image (50) becomes higher as a whole. In view of this, the determiner (25) determines that the cause of the turbidity of the hydraulic oil is "contamination with water," when the calculated average value VC_ave of the intensity values of the second region (57) is greater than the reference intensity value (i.e., VC_max (n) < VC_ave).

On the other hand, when the hydraulic oil is turbid due to the contamination with particulate solid particles such as sludge, the intensity level of the determination image (50) becomes closer to "black" as a whole with an increase in the degree of turbidity of the hydraulic oil. Accordingly, the intensity level of the second region (57) of the determination image (50) becomes lower as a whole. In view of this, the determiner (25) determines that the cause of the turbidity of the hydraulic oil is "contamination with solid particles such as sludge," when the calculated average value VC_ave of the intensity values of the second region (57) is equal to or lower than the reference intensity value (i.e., VC_ave ≤ VC_max (n)).

### -Overall Flow of Operation of Turbidity Determination Device-

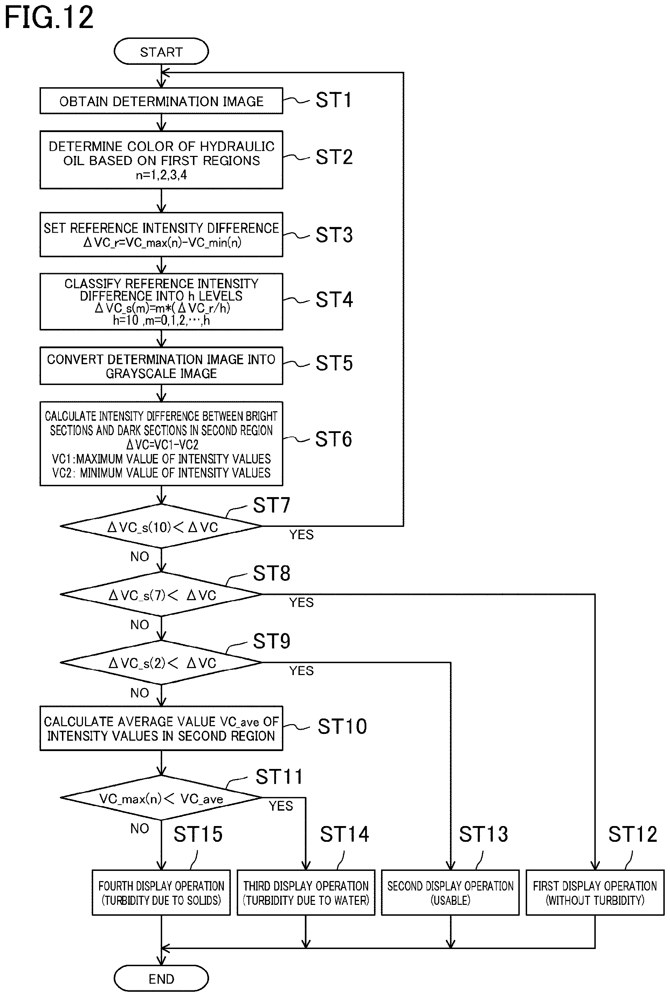

The overall flow of the operation of the turbidity determination device (10) will be described with reference to the flowchart of FIG. 12.

The determiner (25) of the turbidity determination device (10) performs a series of processes shown in the flowchart of FIG. 12 by execution, by the CPU (26), of a program recorded in the memory device (27). In the flowchart of FIG. 12, the process in step ST2 corresponds to the color determination operation executed by the determiner (25), the process from step ST3 to step ST9 corresponds to the turbidity determination operation executed by the determiner (25), and the process from step ST10 to step ST11 corresponds to the cause determination operation executed by the determiner (25).

### <Step ST1>

In the process in step ST1, the camera (35) obtains a determination image (50). Specifically, with the determination space (32) filled with the hydraulic oil inside the hydraulic oil tank (60), the light source (36) of the camera (35) irradiates the imaging target member (40) with light, and the camera (35) captures an image of the imaging target member (40). The camera (35) transmits the obtained determination image (50) to the determiner (25). The determiner (25) causes the memory device (27) to store the determination image (50) transmitted from the camera (35) as a color image with red (R), green (G), and blue (B) components each having 256 levels. After the end of the process in step ST1, the determiner (25) performs the process in step ST2.

### <Step ST2>

The process in step ST2 corresponds to the color determination operation performed by the determiner (25). Details of the color determination operation are as described above. In the process in step ST2, the determiner (25) determines, based on four first regions (56) set in the determination image (50), which is a color image, which of "clear (n=1)," "yellow (n=2)," "golden yellow (n=3)," and "black (n=4)," the color of the hydraulic oil filling the determination space (32) corresponds to.

The hydraulic oil filling the determination space (32) is the same color as the hydraulic oil in the hydraulic oil tank (60). Accordingly, in the process in step ST2, the determiner (25) determines the color of the hydraulic oil in the hydraulic oil tank (60). After the end of the process in step ST2, the determiner (25) performs the process in step ST3.

### <Step ST3>

In the process in step ST3, the determiner (25) starts the turbidity determination operation.

In the process in step ST3, the determiner (25) sets the reference intensity difference ΔVC_r. Specifically, the determiner (25) reads, from the memory device (27), the maximum reference intensity value VC_max (n) and the minimum reference intensity value VC_min (n) corresponding to the color of the hydraulic oil determined in the process in step ST2. The determiner (25) refers to the difference between the maximum reference intensity value VC_max (n) and the minimum reference intensity value VC_min (n) read from the memory device (27) as a reference intensity difference ΔVC_r (i.e., ΔVC_r = VC_max (n) - VC_min (n)). After the end of the process in step ST3, the determiner (25) performs the process in step ST4.

### <Step ST4>

In the process in step ST4, the determiner (25) sets a plurality of (ten in this embodiment) levels (LEVEL (m)) by performing the arithmetic processing shown in the above Equation (1) using the reference intensity difference ΔVC_r set in the process in step ST3. After the end of the process in step ST4, the determiner (25) performs the process in step ST5.

### <Step ST5>

In the process in step ST5, the determiner (25) converts the determination image (50), which is a color image obtained by the camera (35) in the process in step ST1, into a grayscale image with 256 levels. After the end of the process in step ST5, the determiner (25) performs the process in step ST6.

### <Step ST6>

In the process in step ST6, the determiner (25) specifies the maximum intensity value VC1 and the minimum intensity value VC2 of the second region (57) in the determination image (50) based on the determination image (50) converted into the grayscale image in the process in step ST5. The determiner (25) then calculates the difference between the maximum intensity value VC1 and the minimum intensity value VC2 of the second region (57), and sets the calculated value as the intensity difference ΔVC (= VC1 - VC2) between the bright sections (51) and the dark sections (52) in the second region (57). After the end of the process in step ST6, the determiner (25) performs the process in step ST7.

### <Step ST7>

In the process in step ST7, the determiner (25) determines whether the requirement "ΔVC_s (10) < ΔVC" is satisfied. If this requirement is satisfied, the intensity difference ΔVC between the bright sections (51) and the dark sections (52) in the second region (57) exceeds LEVEL (10). If the determination image (50) obtained by the camera (35) in the process in step ST1 is normal, the intensity difference ΔVC does not exceed LEVEL (10). That is, if the intensity difference ΔVC exceeds LEVEL (10), there is high possibility that a problem such as adhesion of air bubbles to the imaging target member (40) has occurred and the condition of the hydraulic oil cannot be determined appropriately based on the determination image (50) obtained by the camera (35) in the process in step ST1.

To address the problem, if the requirement "ΔVC_s (10) < ΔVC" is satisfied, the determiner (25) performs the process from step ST1 to step ST6 again. That is, in this case, the determiner (25) performs the color determination operation using the determination image (50) obtained again by the camera (35), and calculates the intensity difference ΔVC between the bright sections (51) and the dark sections (52) in the second region (57) of the determination image (50). On the other hand, if this requirement is not satisfied, the determiner (25) performs the process in step ST8.

### <Step ST8>

In the process in step ST8, the determiner (25) determines whether the requirement "ΔVC_s (7) < ΔVC" is satisfied. If this requirement is satisfied, the intensity difference ΔVC between the bright sections (51) and the dark sections (52) in the second region (57) is at a level from LEVEL (8) to LEVEL (10). If the intensity difference ΔVC is at a level from LEVEL (8) to LEVEL (10), the degree of turbidity of the hydraulic oil corresponds to "substantially no turbidity". In view of this, if this requirement is satisfied, the determiner (25) performs the process in step ST12. On the other hand, if this requirement is not satisfied, the determiner (25) performs the process in step ST9.

### <Step ST9>

In the process in step ST9, the determiner (25) determines whether the requirement "ΔVC_s (2) < ΔVC" is satisfied. If this requirement is satisfied, the intensity difference ΔVC between the bright sections (51) and the dark sections (52) in the second region (57) is at a level from LEVEL (3) to LEVEL (7). If the intensity difference ΔVC is at a level from LEVEL (3) to LEVEL (7), the degree of turbidity of the hydraulic oil corresponds to "low turbidity". In view of this, if this requirement is satisfied, the determiner (25) performs the process in step ST13. On the other hand, if this requirement is not satisfied, the determiner (25) performs the process in step ST10.

### <Step ST10>

In the process in step ST9, if the requirement "ΔVC_s (2) < ΔVC" is not satisfied, the intensity difference ΔVC between the bright sections (51) and the dark sections (52) in the second region (57) is at a level from LEVEL (1) to LEVEL (2). If the intensity difference ΔVC is at a level from LEVEL (1) to LEVEL (2), the degree of turbidity of the hydraulic oil corresponds to "high turbidity". If the degree of turbidity of the hydraulic oil corresponds to the "high turbidity," the determiner (25) determines that "the hydraulic oil has a high degree of turbidity and is thus unusable." In the process in step ST10, the determiner (25) then starts the cause determination operation.

In the process in step ST10, the determiner (25) calculates the average value VC_ave of the intensity values in the second region (57) of the determination image (50) converted into the grayscale image in the process in step ST5. After the end of the process in step ST10, the determiner (25) performs the process in step ST11.

### <Step ST11>

In the process in step ST11, the determiner (25) sets the maximum reference intensity value VC_max (n) read from the memory device (27) in the process in step ST3 as the reference intensity value of the cause determination operation. The determiner (25) then determines whether the requirement "VC_max (n) < VC_ave" is satisfied.

If the requirement "VC_max (n) < VC_ave" is satisfied, the intensity level of the second region (57) of the determination image (50) is closer to "white" as a whole. In view of this, the determiner (25) determines that the cause of the turbidity of the hydraulic oil is "contamination with water" and thus performs the process in step ST14.

If the requirement "VC_max (n) < VC_ave" is not satisfied, the intensity level of the second region (57) of the determination image (50) is closer to "black" as a whole. In view of this, the determiner (25) determines that the cause of the turbidity of the hydraulic oil is "contamination with solid particles such as sludge" and thus performs the process in step ST15.

### <Step ST12>

The process in step ST12 is performed, if the degree of turbidity of the hydraulic oil is determined to correspond to "substantially no turbidity" in the process in step ST8.

In the process in step ST12, the determiner (25) performs a first display operation. The first display operation is an operation of causing the display (21) of the main unit (20) to display information indicating that "the hydraulic oil has substantially no turbidity and is in good condition." As this first display operation, the determiner (25) performs an "operation of turning on the LED lamp, which is the display (21), in green." The color of the light emitted by the display (21) is merely an example.

### <Step ST13>

The process in step ST13 is performed, if the degree of turbidity of the hydraulic oil is determined to correspond to "low turbidity" in the process in step ST9.

In the process in step ST13, the determiner (25) performs a second display operation. The second display operation is an operation of causing the display (21) of the main unit (20) to display information indicating that "the hydraulic oil has a low degree of turbidity and is thus usable." As this second display operation, the determiner (25) performs an "operation of turning on the LED lamp, which is the display (21), in orange," for example. The color of the light emitted by the display (21) is merely an example.

### <Step ST14>

The process in step ST14 is performed, if the cause of the turbidity of the hydraulic oil is determined to be "contamination with water" in the process in step ST11.

In the process in step ST14, the determiner (25) performs a third display operation. The third display operation is an operation of causing the display (21) of the main unit (20) to display information indicating that the cause of the turbidity of the hydraulic oil is "contamination with water." As this third display operation, the determiner (25) performs an "operation of turning on the LED lamp, which is the display (21), in red and blue alternately," for example. The colors of the light emitted by the display (21) are merely an example.

### <Step ST15>

The process in step ST15 is performed, if the cause of the turbidity of the hydraulic oil is determined to be "contamination with solid particles" in the process in step ST11.

In the process in step ST15, the determiner (25) performs a fourth display operation. The fourth display operation is an operation of causing the display (21) of the main unit (20) to display information indicating that the cause of the turbidity of the hydraulic oil is "contamination with solid particles such as sludge." As this fourth display operation, the determiner (25) performs an "operation of turning on the LED lamp, which is the display (21), in red," for example. The color of the light emitted by the display (21) is merely an example.

### -Feature (1) of First Embodiment-

In the turbidity determination device (10) according to this embodiment, the camera (35) obtains an image of the imaging target member (40) as a determination image (50). The hydraulic oil subjected to the turbidity determination is present between the camera (35) and the imaging target member (40). The intensity difference between the bright section (51) and the dark section (52) in the determination image (50) varies depending on the degree of turbidity of the hydraulic oil present between the imager (35) and the imaging target member (40). The determiner (25) thus determines the degree of turbidity of the hydraulic oil based on the intensity difference between the bright sections (51) and the dark sections (52) in the determination image (50).

In the description according to this embodiment, the "intensity difference" is an index indicating the "difference in color intensity." The "intensity difference" in the grayscale image has substantially the same meaning as "contrast."

The turbidity determination device (10) according to this embodiment can determine the degree of turbidity of the hydraulic oil when the hydraulic oil subjected to the turbidity determination is present between the imager (35) and the imaging target member (40). With the use of this turbidity determination device (10), the degree of turbidity of the hydraulic oil can be determined without taking an inspection sample of the hydraulic oil out of the hydraulic equipment.

In particular, while being installed in a hydraulic oil tank (60), the turbidity determination device (10) according to this embodiment determines the degree of turbidity of the hydraulic oil. Accordingly, the device can continuously determine the condition of the hydraulic oil actually used, and immediately notify the user or the administrator of the hydraulic equipment of the degradation in the condition of the hydraulic oil. The turbidity determination device (10) according to this embodiment can thus provide the user or the administrator of the hydraulic equipment with information useful for reducing possible troubles in the hydraulic equipment caused by continuously using the degraded hydraulic oil.

### -Feature (2) of First Embodiment-

In the turbidity determination device (10) according to this embodiment, the determiner (25) determines the color of the hydraulic oil in the color determination operation. The determiner (25) determines the degree of turbidity of the hydraulic oil by comparing the reference intensity difference ΔVC_r with the intensity difference ΔVC. The reference intensity difference ΔVC_r corresponds to the color of the hydraulic oil. The intensity difference ΔVC is the intensity difference between the bright sections (51) and the dark sections (52) in the determination image (50) obtained by the imager (35). Accordingly, even when the color of the hydraulic oil changes in the use of the hydraulic oil, the turbidity determination device (10) according to this embodiment can determine the degree of turbidity of the hydraulic oil precisely.

In particular, the determiner (25) according to this embodiment performs the color determination operation based on the first regions (56) including only the bright sections (51) of the determination image (50). In this embodiment, the ring portion (41) of the imaging target member (40) that forms the bright section (51) of the determination image (50) is white. The first regions (56) of the determination image (50) are substantially in the same color as the hydraulic oil filling the determination space (32). In the turbidity determination device (10) according to this embodiment, the color determination operation of the determiner (25) can determine the color of the hydraulic oil stored in the hydraulic oil tank (60) accurately.

### -Feature (3) of First Embodiment-

The determiner (25) of the turbidity determination device (10) according to this embodiment determines, in the turbidity determination operation, the degree of turbidity of the hydraulic oil based on the intensity difference ΔVC between the bright sections (51) and the dark sections (52) of the second region (57) in the determination image (50).

The second region (57) of the determination image (50) used in the turbidity determination operation includes the plurality of bright sections (51) and the plurality of dark sections (52). The determiner (25) according to this embodiment refers to the difference between the maximum intensity value VC1, which is the maximum value of the intensity values of the bright sections (51) of the second region (57), and the minimum intensity value VC2, which is the minimum value of the intensity values of the dark sections (52) in the second region (57), as the intensity difference ΔVC (= VC1 - VC2) between the bright sections (51) and the dark sections (52) in the second region (57). Accordingly, in this embodiment, the intensity difference ΔVC between the bright sections (51) and the dark sections (52) in the second region (57) can be calculated accurately. As a result, the degree of turbidity of the hydraulic oil can be determined accurately.

### -Feature (4) of First Embodiment-

In the turbidity determination device (10) according to this embodiment, the determiner (25) performs the cause determination operation, if the hydraulic oil has a high degree of turbidity. In the cause determination operation, the determiner (25) determines whether the cause of the turbidity of the hydraulic oil is "contamination with water" or "contamination with solid particles."

The countermeasure to be taken differs between the cases where the cause of the turbidity of the hydraulic oil is "contamination with water" and "contamination with solids." Accordingly, the turbidity determination device (10) according to this embodiment can provide information for determining the countermeasure to be taken, to the user or the administrator of the hydraulic equipment by determining the cause of the turbidity of the hydraulic oil.

### -Feature (5) of First Embodiment-

Here, with a change in the distance from the camera (35) to the imaging target member (40), the correlation between the "degree of turbidity of the hydraulic oil" and the "intensity difference ΔVC between the bright sections (51) and the dark sections (52) in the determination image (50)" changes. On the other hand, in the turbidity determination device (10) according to this embodiment, the imaging target member (40) is fixed to the sheath pipe (30) via the partition member (31), and the distance L from the camera (35) to the imaging target member (40) is kept constant. Accordingly, in the turbidity determination device (10) according to the embodiment, the correlation between the "degree of turbidity of the hydraulic oil" and the "intensity difference ΔVC between the bright sections (51) and the dark sections (52) in the determination image (50)" can be kept constant, and the turbidity determination device (10) can thus determine the degree of turbidity of the hydraulic oil accurately.

### -Feature (6) of First Embodiment-

In the turbidity determination device (10), the imaging target member (40) may be in the shape of a flat plate without any through hole (43) and form white and black regions on the upper surface thereof. These black regions may form the dark sections (52) of the determination image (50). In this case, however, once a whitish foreign object is placed on the black region of the imaging target member (40), the determiner (25) may erroneously determine that the intensity value of the dark sections (52) of the determination image (50) is greater than the actual intensity value, resulting in erroneous determination on the degree of turbidity of the hydraulic oil.

In contrast, in the turbidity determination device (10) according to this embodiment, the through holes (43) of the imaging target member (40) form the dark sections (52) of the determination image (50). No foreign object remains in the through holes (43) of the imaging target member (40). Accordingly, the determiner (25) can accurately determine the intensity value of the dark sections (52) of the determination image (50), resulting in accurate determination on the degree of turbidity of the hydraulic oil.

### -Feature (7) of First Embodiment-

Entering the determination space (32) between the camera (35) and the imaging target member (40), a foreign object may be included in the determination image (50). If an object other than the imaging target member (40) is included in the determination image (50), the result of the determination of the color of the hydraulic oil in the color determination operation, the result of the determination of the degree of turbidity of the hydraulic oil in the turbidity determination operation, and the result of the determination of the cause of the turbidity of the hydraulic oil in the cause determination operation may be inaccurate.

On the other hand, in the turbidity determination device (10) according to this embodiment, the determination space (32) between the camera (35) and the imaging target member (40) is surrounded by the wire mesh-shaped partition member (31). This configuration allows the hydraulic oil to come in and out of the determination space (32) and reduces relatively large foreign objects from entering the determination space (32). The turbidity determination device (10) according to this embodiment can reduce the possible erroneous determination due to a foreign object that has entered the determination space (32). As a result, the determination of the color of the hydraulic oil in the color determination operation, the determination of the degree of turbidity of the hydraulic oil in the turbidity determination operation, and the determination of the cause of the turbidity of the hydraulic oil in the cause determination operation can be performed accurately.

### -Variation of First Embodiment-

The turbidity determination device (10) of the first embodiment may be modified as follows. The following variations may be combined or replaced as appropriate as long as the functions of the turbidity determination device (10) are not impaired.

### <First Variation>

The color of the imaging target member (40) is not limited to white. However, the sections of the imaging target member (40) that form the bright sections (51) are desirably in a color with a high brightness.

### <Second Variation>

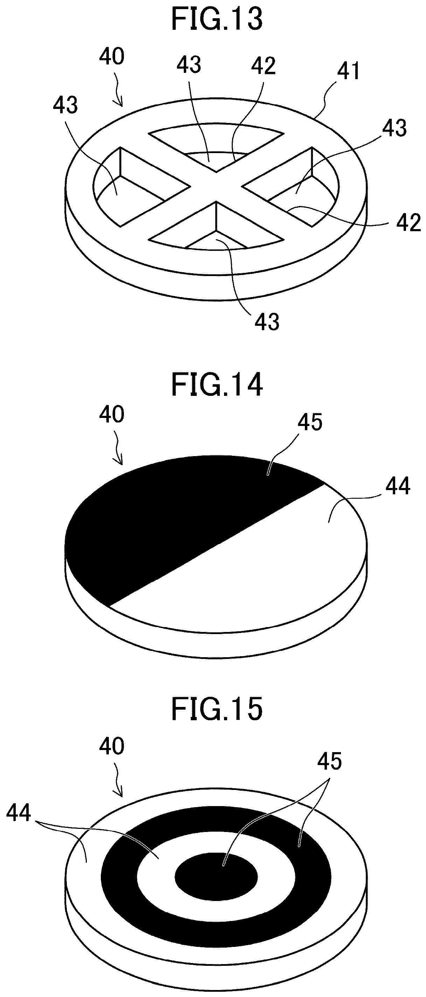

The bridge portions (42) of the imaging target member (40) are not limited to the straight rod shape. For example, as shown in FIG. 13, the bridge portions (42) may form an X-shape. In the imaging target member (40) shown in FIG. 13, four through holes (43) defined by the bridge portions (42) in the X-shape are formed inside the ring portion (41).

### <Third Variation>

The imaging target member (40) may be a member in the shape of a flat plate without any through hole (43).

As shown in FIGS. 14 and 15, the imaging target member (40) according to this variation has a white region(s) (44) and a black region(s) (45) on the surface facing the imager (35). The white region(s) (44) form(s) a bright section(s) (51) of the determination image (50). The black region(s) (45) form(s) a dark section(s) (52) of the determination image (50).

In the imaging target member (40) shown in FIG. 14, the surface facing the camera (35) is divided into two equal regions, namely, the white region (44) and the black region (45). In the imaging target member (40) shown in FIG. 15, the white regions (44) and the black regions (45) each in an annular shape are alternately disposed in a concentric manner on the surface facing the camera (35).

### <Fourth Variation>

The turbidity determination device (10) according to this embodiment may cause an external device such as a smartphone to display the results of the determination obtained in the turbidity determination operation and the cause determination operation of the determiner (25). In this case, the turbidity determination device (10) is communicable with the external device such as the smartphone in a wireless manner.

### <<Second Embodiment>>

A turbidity determination device (10) according to a second embodiment will be described. As in the turbidity determination device (10) according to the first embodiment, the turbidity determination device (10) according to this embodiment also serves as a turbidity determination system (15).

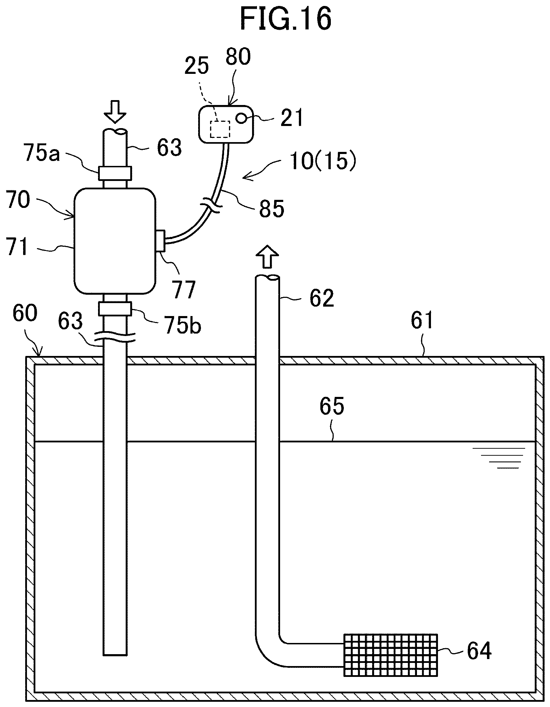

As shown in FIG. 16, the turbidity determination device (10) according to this embodiment includes an imaging unit (70) and a determination unit (80). The imaging unit (70) and the determination unit (80) are electrically connected to each other via a connection cable (85). The imaging unit (70) and the determination unit (80) communicate with each other via the connection cable (85). The imaging unit (70) is provided in a middle of the return pipe (63) connected to the hydraulic oil tank (60). The return pipe (63) is an oil pipe through which the hydraulic oil flows.

### -Imaging Unit-

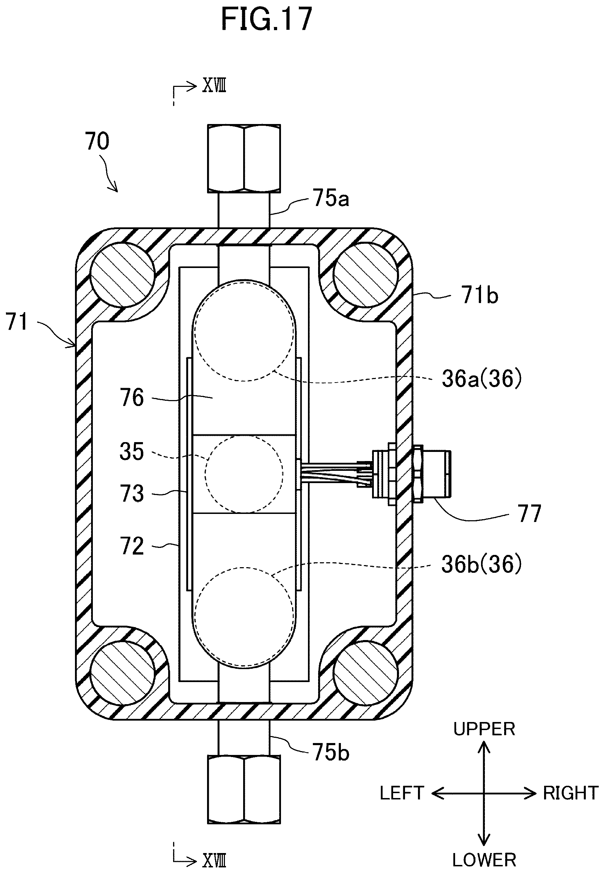

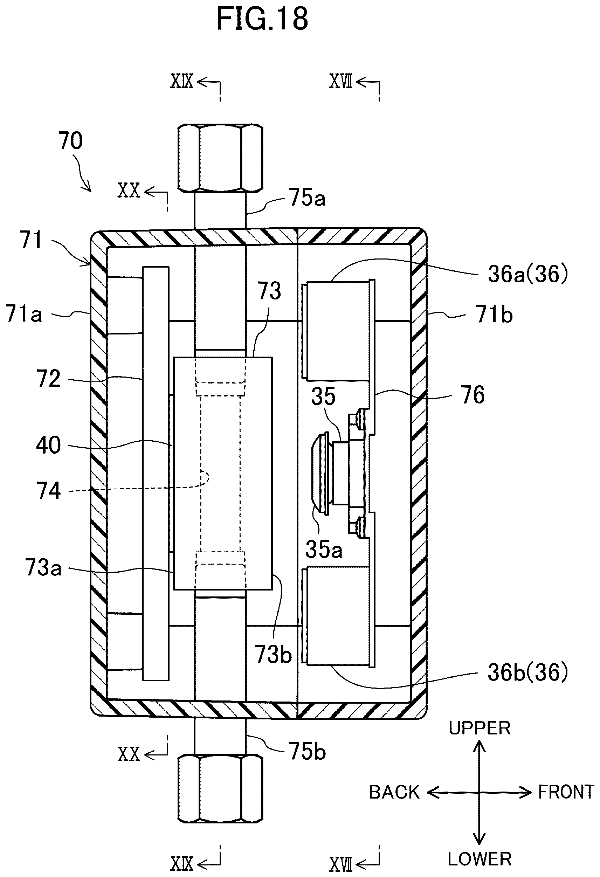

The imaging unit (70) will be described with reference to FIGS. 17 to 21 as appropriate. In the following description, "upper," "lower," "right," "left," "front," and "back" represent the directions shown in FIGS. 17 and 18.

As shown in FIGS. 17 and 18, the imaging unit (70) includes a case (71). The case (71) houses therein a camera (35), a first light source (36a), a second light source (36b), a passage block (73), an imaging target member (40), and a base plate (72). A first joint member (75a) and a second joint member (75b) are connected to the passage block (73).

### <Case>

The case (71) is a member in the shape of a rectangular parallelepiped box. As shown in FIG. 18, the case (71) includes a case body (71a) and a case lid (71b). The case lid (71b) is disposed in front of the case body (71a) and covers the opening of the case body (71a). As shown in FIG. 17, a coupler (77) for coupling the connection cable (85) is provided on a side (e.g., on the right in this embodiment) of the case (71).

The material of the case body (71a) and the case lid (71b) forming the case (71) is a synthetic resin that transmits no light. The material of one or both of the case body (71a) and the case lid (71b) may be metal.

### <Base Plate>

The base plate (72) is a member in the shape of a thick rectangular plate. The material of the base plate (72) is a transparent synthetic resin (e.g., an acrylic resin).

As shown in FIGS. 17 and 18, the base plate (72) is housed in the case body (71a). The base plate (72) is fixed to the bottom of the case body (71a) to be substantially parallel to the bottom of the case body (71a). The base plate (72) is disposed at a central portion of the case body (71a) in the left-right direction with its long sides extending in the up-down direction.

### <Imaging Target Member>

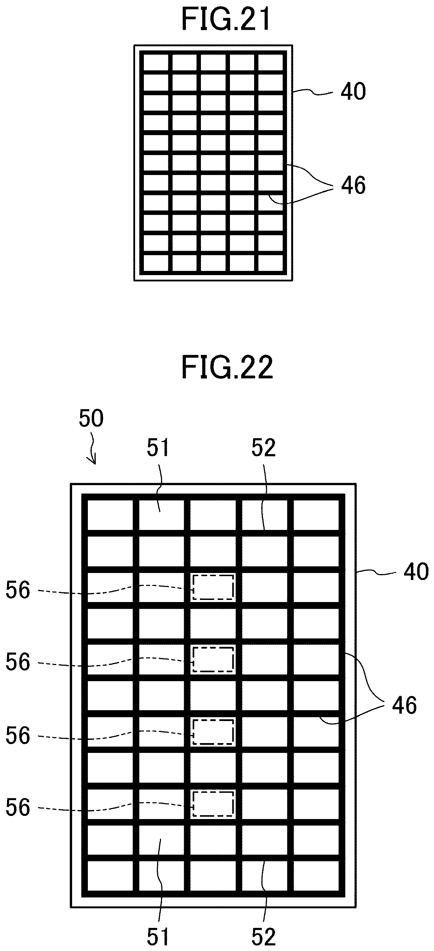

As shown in FIG. 21, the imaging target member (40) according to this embodiment is a member in the shape of a rectangular sheet. The material of the imaging target member (40) is a white synthetic resin that transmits no light.

The imaging target member (40) has a determination pattern (46) drawn on a surface thereof. The determination pattern (46) according to this embodiment is in the shape of a black grid. This determination pattern (46) includes a plurality of slightly thick black vertical lines at regular intervals, and a plurality of slightly thick black horizontal lines at regular intervals.

In the imaging target member (40) according to this embodiment, the black determination pattern (46) forms the dark sections (52) of the determination image (50), and the white sections other than the determination pattern (46) form the bright sections (51) of the determination image (50).

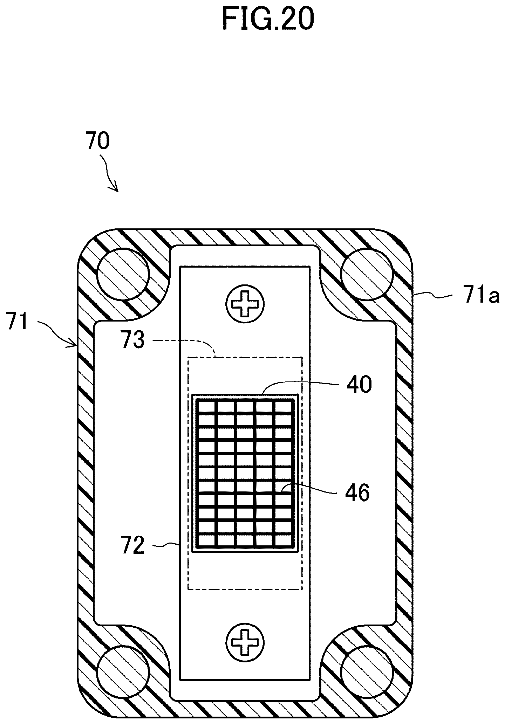

As shown in FIGS. 18 and 20, the imaging target member (40) in a sheet shape is attached to the front surface of the base plate (72) with the surface with determination pattern (46) facing forward. The imaging target member (40) is disposed at a central portion of the base plate (72) in the up-down direction and the left-right direction.

### <Passage Block>

The passage block (73) is an intermediate member between the imaging target member (40) and the camera (35).

The passage block (73) is a member in the shape of a rectangular parallelepiped block. The passage block (73) is a hexahedron with six side surfaces. Each side surface of the passage block (73) is a substantially flat surface. In the passage block (73), a pair of opposing side surfaces are substantially parallel to each other. The material of the passage block (73) is a transparent synthetic resin (e.g., an acrylic resin).

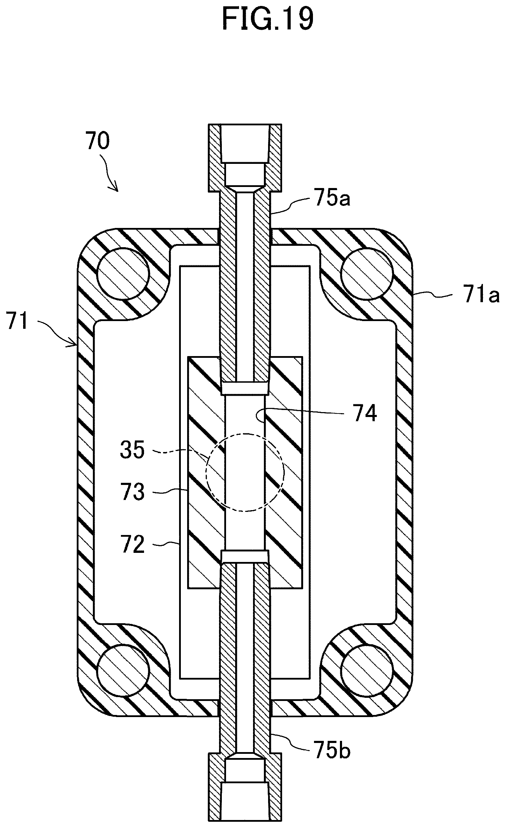

As shown in FIGS. 18 and 19, the passage block (73) has an oil passage (74) through which the hydraulic oil flows. The oil passage (74) is a through hole extending in the longitudinal direction of the passage block (73) (i.e., the up-down direction in FIG. 18). The oil passage (74) has a circular cross section. One end of the oil passage (74) is open in one end surface (i.e., the upper end surface in FIG. 18) of the passage block (73). The other end of the oil passage (74) is open in the other end surface (i.e., the lower end surface in FIG. 18) of the passage block (73).

As shown in FIG. 18, the passage block (73) is disposed in front of the base plate (72). The passage block (73) is in close contact with the imaging target member (40) attached to the base plate (72). As shown in FIG. 20, the passage block (73) covers the entire imaging target member (40).

As shown in FIG. 18, the back surface of the passage block (73) in close contact with the imaging target member (40) is a first side surface (73a), and the front surface of the passage block (73) opposite to the imaging target member (40) is a second side surface (73b). In the passage block (73), the oil passage (74) is disposed between the first side surface (73a) and the second side surface (73b) that are parallel to each other.

### <Camera>

The camera (35) according to this embodiment is an imager that obtains an image of the imaging target member (40), as in the camera (35) according to the first embodiment. The camera (35) according to this embodiment includes a lens (35a) and obtains a color image.

As shown in FIGS. 17 and 18, the camera (35) is fixed to the case lid (71b) via a support plate (76). The camera (35) is electrically connected to the coupler (77).

In the internal space of the case (71), the camera (35) is located in front of the passage block (73). The lens (35a) of the camera (35) is opposed to the second side surface (73b) of the passage block (73). As shown in FIG. 19, the lens (35a) of the camera (35) is opposed to a region of the second side surface (73b) near the center in the up-down direction.

The camera (35) is opposed to the second side surface (73b) of the passage block (73) and obtains an image of the imaging target member (40) on the other side of the passage block (73) as a determination image (50). In other words, the camera (35) obtains, as a determination image (50), an image of the imaging target member (40) as viewed from the second side surface (73b) of the passage block (73).

### <First Light Source and Second Light Source>

A first light source (36a) and a second light source (36b) are light sources (36) that emit light. The first light source (36a) and the second light source (36b) are each a white LED lamp.

The first light source (36a) and the second light source (36b) are, together with the camera (35), fixed to a support plate (76). The first light source (36a) and the second light source (36b) are electrically connected to the coupler (77).

In the internal space of the case (71), the first light source (36a), the camera (35), and the second light source (36b) are aligned sequentially in the direction in which the oil passage (74) extends (i.e., the up-down direction in FIGS. 17 and 18). In FIGS. 17 and 18, the first light source (36a) is disposed above the camera (35), and the second light source (36b) is disposed below the camera (35).

### <First Joint Member and Second Joint Member>

As shown in FIGS. 18 and 19, the first joint member (75a) and the second joint member (75b) are each a circular tubular member made of metal.

The first joint member (75a) penetrates the upper side of the case body (71a) in FIG. 18. One end (i.e., the lower end in FIG. 18) of the first joint member (75a) is inserted into an opening of the oil passage (74) in the upper surface of the passage block (73) in FIG. 18. The other end (i.e., the upper end in FIG. 18) of the first joint member (75a) is connected to the return pipe (63) through which the hydraulic oil flows.

The second joint member (75b) penetrates through the lower side portion of the case body (71a) in FIG. 18. One end (i.e., the upper end in FIG. 18) of the second joint member (75b) is inserted into an opening of the oil passage (74) in the lower surface of the passage block (73) in FIG. 18. The other end (i.e., the lower end in FIG. 18) of the second joint member (75b) is connected to the return pipe (63) through which the hydraulic oil flows.

### -Determination Unit-

As shown in FIG. 16, the determination unit (80) includes a determiner (25) and a display (21).

### <Determiner>

The determiner (25) according to this embodiment is configured similarly to the determiner (25) according to the first embodiment. Specifically, the determiner (25) according to this embodiment includes a CPU (26) and a memory device (27).

The determiner (25) according to this embodiment performs the same operation as the determiner (25) according to the first embodiment. Specifically, the determiner (25) according to this embodiment performs the color determination operation, the turbidity determination operation, and the cause determination operation using a determination image (50).

### <Display>

The display (21) according to this embodiment includes one or more LED lamps, as in the display (21) according to the first embodiment.

### -Operation of Turbidity Determination Device-

The operation of the turbidity determination device (10) will be described.

The turbidity determination device (10) performs the operation described later while the hydraulic oil passes through the imaging unit (70). The hydraulic oil flowing through the return pipe (63) flows through the first joint member (75a) into the oil passage (74) of the passage block (73), and flows through the oil passage (74). The hydraulic oil that has passed through the oil passage (74) flows through the second joint member (75b) out of the imaging unit (70), and flows through the return pipe (63) into the hydraulic oil tank (60) again.

In the turbidity determination device (10), the camera (35), which is an imager, obtains an image of the imaging target member (40) as a determination image (50). In the turbidity determination device (10), the determiner (25) performs the color determination operation, the turbidity determination operation, and the cause determination operation based on the determination image (50). The determiner (25) sequentially performs the color determination operation and the turbidity determination operation. The determiner (25) performs the cause determination operation when determining in the turbidity determination operation that the hydraulic oil has a high degree of turbidity (i.e., the hydraulic oil is in bad condition). These operations are the same as those performed by the turbidity determination device (10) according to the first embodiment.

### <Determination Image>

As described above, the camera (35) obtains an image of the imaging target member (40) as a determination image (50). The camera (35) transmits the obtained determination image (50) to the determiner (25). The determiner (25) causes the memory device (27) to store the determination image (50) received from the camera (35) as a color image with red (R), green (G), and blue (B) components each having 256 levels. The levels of RGB channels shown here are merely an example.

The light emitted by the first light source (36a) and the second light source (36b) passes through the transparent passage block (73), and hits and is reflected by the imaging target member (40). The light that has hit and been reflected by the imaging target member (40) passes through the passage block (73) and the hydraulic oil flowing through the oil passage (74), and enters the camera (35).

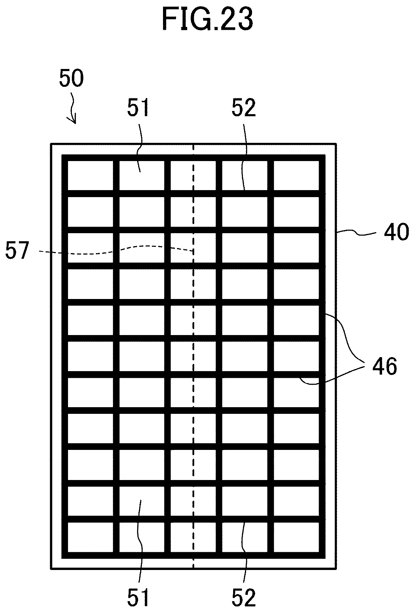

Examples of the determination image (50) obtained by the camera (35) are shown in FIGS. 22 and 23. The determination image (50) is a planar image of the imaging target member (40). In the imaging target member (40), the section corresponding to the black determination pattern (46) drawn on the surface of the imaging target member (40) serves as a dark section (52) with a relatively low brightness. In the imaging target member (40), the section corresponding to a white region other than the determination pattern (46) on the surface of the imaging target member (40) serves as a bright section (51) with a relatively high brightness.

### <Color Determination Operation>

The color determination operation will be described. The color determination operation is the "operation in which the determiner (25) determines the color of the hydraulic oil based on the determination image (50)."

As shown in FIG. 22, the determiner (25) sets four first regions (56) in the determination image (50), which is a color image. The first regions (56) are each a part of the determination image (50) and each include only the bright section (51). Note that the number of the first regions (56) is merely an example and may be one. The determiner (25) sets the first regions (56) in the section of the determination image (50) corresponding to the region other than the determination pattern (46) of the imaging target member (40).

The determiner (25) determines the color of the hydraulic oil under the ASTM color standard. The process for determining the color of the hydraulic oil is the same as the process performed by the determiner (25) according to the first embodiment. Specifically, the determiner (25) calculates the average value of the intensity values of each RGB for all the first regions (56). Based on the calculated average value of the intensity values of each RGB for the first regions (56), the determiner (25) then determines which of "clear," "yellow," "golden yellow," and "black" the color of the hydraulic oil corresponds to.

### <Turbidity Determination Operation>

The turbidity determination operation will be described. The turbidity determination operation is the "operation in which the determiner (25) determines the degree of turbidity of the hydraulic oil based on the determination image (50)."

The turbidity determination operation performed by the determiner (25) according to this embodiment is the same as that according to the first embodiment. The second region (57) set by the determiner (25) according to this embodiment in the turbidity determination operation is however different from that according to the first embodiment.

The second region (57) set by the determiner (25) according to this embodiment in the turbidity determination operation will be described with reference to FIG. 23.

The second region (57) is a part of the determination image (50). The second region (57) is a linear region located at the center, in the left-right direction, of the determination pattern (46) included in the determination image (50). The second region (57) is located in the section of the determination pattern (46) included in the determination image (50) and overlapping the oil passage (74) as viewed from the second side surface (73b) of the passage block (73).

The second region (57) crosses a plurality of horizontal lines constituting the determination pattern (46). In the second region (57), the dark section (52) formed by the determination pattern (46) and the bright section (51) formed by the section of the imaging target member (40) other than the determination pattern (46) alternately appear from one end to the other end of the second region (57).

In the turbidity determination operation, the determiner (25) according to this embodiment calculates the intensity difference ΔVC (= VC1 - VC2) between the bright sections (51) and the dark sections (52) in the second region (57), and determines to which level shown in FIG. 11 the calculated intensity difference ΔVC corresponds, similarly to the determiner (25) according to the first embodiment. The determiner (25) then determines whether the degree of turbidity of the hydraulic oil corresponds to "substantially no turbidity," "low turbidity," or "high turbidity" in accordance with the level of the intensity difference ΔVC.

### <Cause Determination Operation>

The determiner (25) performs the cause determination operation when determining that "the hydraulic oil has a high degree of turbidity and is thus unusable." The cause determination operation is "the operation in which the determiner (25) determines the cause of the turbidity of the hydraulic oil based on the determination image (50)."

In the cause identification operation, the determiner (25) according to this embodiment calculates the average value VC_ave of the intensity values in the second region (57) of the determination image (50), and then determines the cause of the turbidity of the hydraulic oil by comparing the calculated average value VC_ave of the intensity values in the second region (57) with the reference intensity value, as in the determiner (25) according to the first embodiment.

Specifically, the determiner (25) according to this embodiment determines that the cause of the turbidity of the hydraulic oil is "contamination with water," when the average value VC_ave of the intensity values of the second region (57) is greater than the reference intensity value (i.e., VC_max (n) < VC_ave). The determiner (25) according to this embodiment determines that the cause of the turbidity of the hydraulic oil is "contamination with solids such as sludge", when the average value VC_ave of the intensity values of the second region (57) is smaller than or equal to the reference intensity value (i.e., VC_ave ≤ VC_max (n)).

### -Overall Flow of Operation of Turbidity Determination Device-

The overall flow of the operation of the turbidity determination device (10) according to this embodiment is the same as that according to the first embodiment in the flowchart of FIG. 12. The turbidity determination device (10) according to this embodiment performs the color determination operation, the turbidity determination operation, and the cause determination operation, and then causes the display (21), which is a LED lamp, to display the results obtained by the turbidity determination operation and the cause determination operation.

### -Feature (1) of Second Embodiment-

As in the turbidity determination device (10) according to the first embodiment, the turbidity determination device (10) according to this embodiment can determine the degree of turbidity of the hydraulic oil when the hydraulic oil subjected to the turbidity determination is present between the imager (35) and the imaging target member (40). With the use of this turbidity determination device (10), the degree of turbidity of the hydraulic oil can be determined without taking an inspection sample of the hydraulic oil out of the hydraulic equipment.

In particular, the turbidity determination device (10) according to this embodiment determines the degree of turbidity of the hydraulic oil returning through the return pipe (63) to the hydraulic oil tank (60). Accordingly, the device can continuously determine the condition of the hydraulic oil actually used, and immediately notify the user or the administrator of the hydraulic equipment of the degradation in the condition of the hydraulic oil. The turbidity determination device (10) according to this embodiment can thus provide the user or the administrator of the hydraulic equipment with information useful for reducing possible troubles in the hydraulic equipment caused by continuously using the degraded hydraulic oil.

The turbidity determination device (10) according to this embodiment can provide the same advantages as the turbidity determination device (10) according to the first embodiment.

### -Feature (2) of Second Embodiment-

In the turbidity determination device (10) according to this embodiment, the hydraulic oil subjected to the turbidity determination flows through the oil passage (74) formed in the passage block (73), and the camera (35) and the imaging target member (40) are arranged outside the passage block (73). Accordingly, in the turbidity determination device (10) according to this embodiment, the hydraulic oil subjected to the turbidity determination is thus in contact with neither the imaging target member (40) nor the camera (35).

Here, if a foreign matter contained in the hydraulic oil adheres to the imaging target member (40) or the camera (35), the determination image (50) accurately reflecting the condition of the hydraulic oil cannot be obtained, and the condition of the hydraulic oil may be erroneously determined.

On the other hand, in the turbidity determination device (10) according to this embodiment, the hydraulic oil subjected to the turbidity determination is in contact with neither the imaging target member (40) nor the camera (35). Thus, the foreign matter contained in the hydraulic oil adheres to neither the imaging target member (40) nor the imager (35). Accordingly, this embodiment can increase the accuracy in determining the condition of the hydraulic oil.

### -Feature (3) of Second Embodiment-

In the turbidity determination device (10) according to this embodiment, the first side surface (73a) of the passage block (73) in contact with the imaging target member (40) is a flat surface. The camera (35) is opposed to the second side surface (73b) of the passage block (73) and obtains an image of the imaging target member (40) on the other side of the passage block (73) as a determination image (50). The second side surface (73b) of the passage block (73) is a flat surface parallel to the first side surface (73a). Accordingly, the camera (35) can obtain an image of the imaging target member (40) with relatively small distortion as a determination image (50).

Accordingly, this embodiment can cause the turbidity determination device (10) to determine the condition of the hydraulic oil using the determination image (50) with small distortion, and increase the accuracy in determining the condition of the hydraulic oil.

### -Feature (4) of Second Embodiment-

In the turbidity determination device (10) according to this embodiment, the imaging target member (40), the camera (35), the passage block (73), the first light source (36a), and the second light source (36b) are arranged in the case (71). The case (71) transmits no light. Inside the case (71), the camera (35) obtains, as a determination image (50), an image of the imaging target member (40) that has received only the light emitted by the first light source (36a) and the second light source (36b). The camera (35) can thus obtain the image of the imaging target member (40) without being influenced by the light outside the case (71).

Accordingly, the turbidity determination device (10) according to this embodiment can determine the condition of the hydraulic oil using the determination image (50) accurately reflecting the condition of the hydraulic oil, and increase the accuracy in determining the condition of the hydraulic oil.

### -Feature (5) of Second Embodiment-

In the turbidity determination device (10) according to this embodiment, the first light source (36a), the camera (35), and the second light source (36b) are aligned along the linear oil passage (74) in the internal space of the case (71). The camera (35) obtains, as a determination image (50), an image of the imaging target member (40) that has received the light emitted by each of the first light source (36a) and the second light source (36b). The camera (35) can thus obtain the image of the imaging target member (40) with a relatively uniform intensity as the determination image (50).

If the light hitting the imaging target member (40) has a uniform intensity, the camera (35) can obtain the determination image (50) accurately reflecting the condition of the hydraulic oil. Accordingly, the turbidity determination device (10) according to this embodiment can determine the condition of the hydraulic oil using the determination image (50) accurately reflecting the condition of the hydraulic oil, and increase the accuracy in determining the condition of the hydraulic oil.

### -Variations of Second Embodiment-

The turbidity determination device (10) according to the second embodiment may be modified as follows. The following variations may be combined or replaced as appropriate as long as the functions of the turbidity determination device (10) are not impaired.

### <First Variation>

As shown in FIG. 18, in the imaging unit (70) of the turbidity determination device (10) according to this embodiment, the lens (35a) of the camera (35) is spaced apart from the second side surface (73b) of the passage block (73). The arrangement of the camera (35) and the passage block (73) in the imaging unit (70) is however not limited to that shown in FIG. 18.

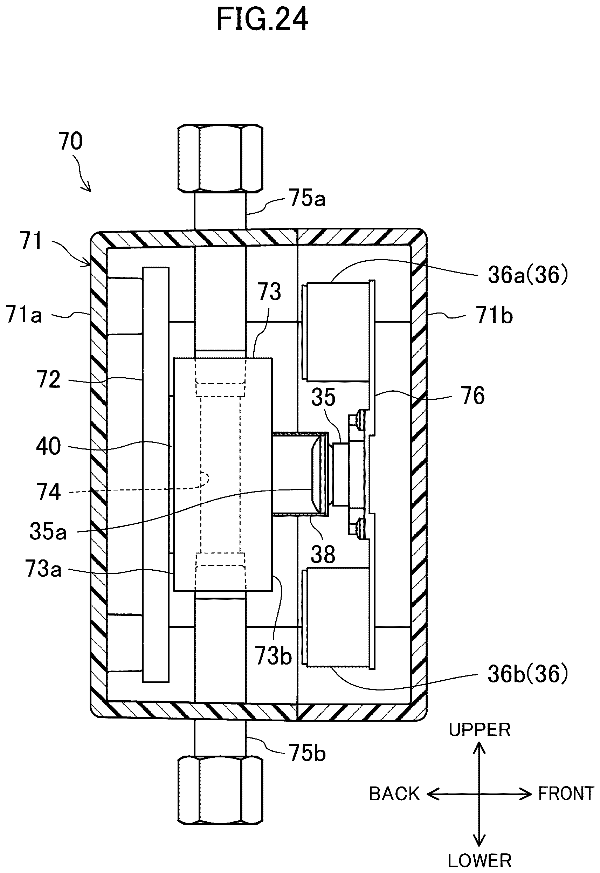

For example, in the imaging unit (70), the camera (35) may be disposed with the lens (35a) thereof in contact with the second side surface (73b) of the passage block (73). As shown in FIG. 24, a cylindrical lens hood (38) may be provided at the distal end of the lens (35a) of the camera (35). In this case, the camera (35) is preferably disposed with the distal end (i.e., the end opposite to the lens (35a)) of the lens hood (38) in contact with the second side surface (73b) of the passage block (73).

With the lens (35a) or the lens hood (38) in contact with the second side surface (73b) of the passage block (73), the light reflected by the second side surface (73b) of the passage block (73) does not enter the camera (35). The camera (35) can thus obtain an image of the imaging target member (40) without being affected by the light reflected by the second side surface (73b) of the passage block (73). Accordingly, the turbidity determination device (10) according to this variation can determine the condition of the hydraulic oil using the determination image (50) accurately reflecting the condition of the hydraulic oil, and increase the accuracy in determining the condition of the hydraulic oil.

### <Second Variation>

In the turbidity determination device (10) according to this embodiment, the determination pattern (46) drawn on the imaging target member (40) is not limited to that in the grid shape shown in FIG. 21.

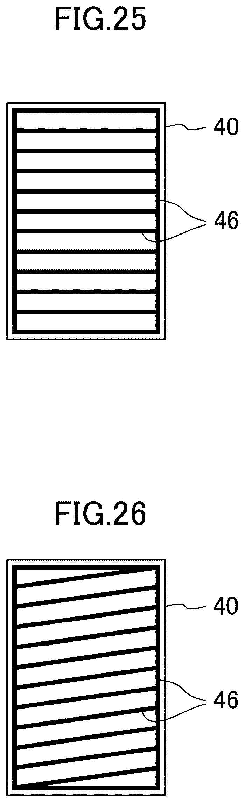

For example, the determination pattern (46) may be that shown in FIG. 25 or 26. The determination patterns (46) shown in FIGS. 25 and 26 each include one rectangular frame and a plurality of horizontal lines parallel to each other. In these determination patterns (46), the plurality of horizontal lines are arranged at regular intervals. In the determination pattern (46) shown in FIG. 25, the plurality of horizontal lines are substantially parallel to the short sides of the frame. In the determination pattern (46) shown in FIG. 26, the plurality of horizontal lines are inclined with respect to the short sides of the frame.

### <Third Variation>

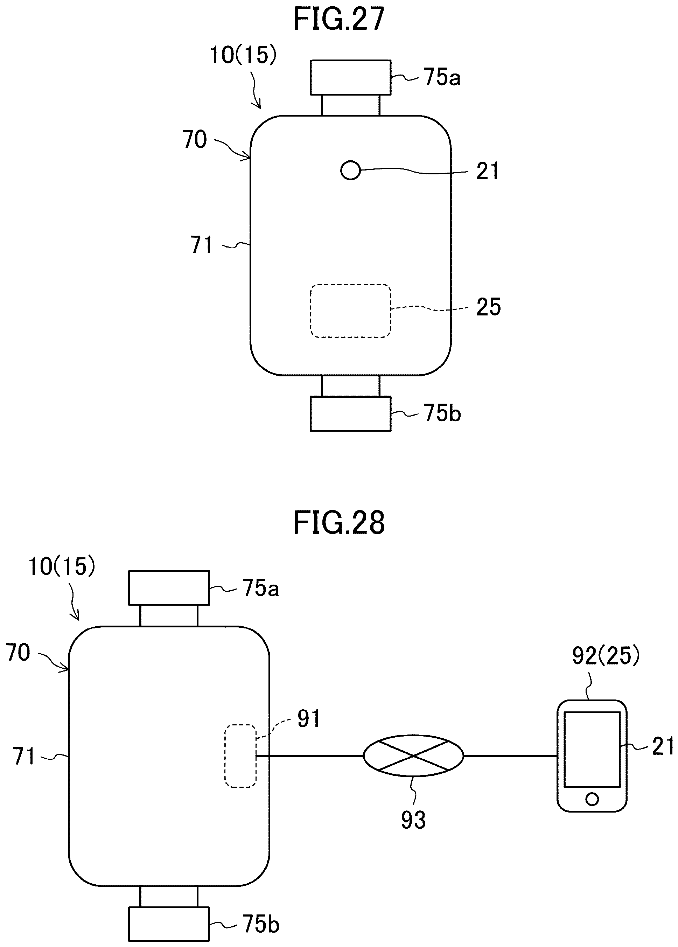

As shown in FIG. 27, in the turbidity determination device (10) according to this embodiment, the imaging unit (70) may include the determiner (25) and the display (21). In the turbidity determination device (10) according to this variation, the determiner (25) is disposed in the internal space of the case (71), the display (21) is disposed on the outer surface of the case (71), and the determination unit (80) is excluded.

### <Fourth Variation>

The turbidity determination device (10) according to this embodiment may cause an external device such as a smartphone to display the results of the determination obtained in the turbidity determination operation and the cause determination operation of the determiner (25). In this case, the turbidity determination device (10) is communicable with the external device such as the smartphone in a wireless manner.

### <Fifth Variation>

In FIG. 16, the imaging unit (70) of the turbidity determination device (10) is installed in the return pipe (63) with the first joint member (75a) located above and the second joint member (75b) located below. The orientation of the imaging unit (70) installed in the return pipe (63) is not limited to that shown in FIG. 16. The imaging unit (70) may be oriented, for example, with the first joint member (75a) and the second joint member (75b) extending in a substantially horizontal direction, or inclined with respect to the vertical direction.

### <<Other Embodiments>>

The turbidity determination device (10) according to the first and second embodiments may be modified as follows. The following variations may be combined or replaced as appropriate as long as the functions of the turbidity determination device (10) are not impaired.

### -First Variation-

In the turbidity determination device (10) according to the first and second embodiments, the determiner (25) may be a general-purpose computer that executes application programs. In this specification, the "computer" refers to a "machine that stores programs describing the procedure (algorithm) of calculation and executes the calculation in accordance with the stored programs." Examples of the "computer" in this specification thus include a large computer, a personal computer, a tablet computer, and a smartphone.

FIG. 28 shows a turbidity determination device (10) according to the second embodiment applied with this variation. This turbidity determination device (10) also serves as a turbidity determination system (15). The turbidity determination device (10) shown in FIG. 28 excludes the determination unit (80), but a smartphone (92) serves as the determiner (25).

In the turbidity determination device (10) shown in FIG. 28, the imaging unit (70) includes a communication module (91). The communication module (91) performs wireless communication under a communication protocol such as Wi-Fi (registered trademark). The imaging unit (70) according to this variation transmits the determination image (50) obtained by the camera (35) to the smartphone (92) serving as the determiner (25) via a communication line (93) such as the Internet.

On the smartphone (92), an application program for causing the smartphone (92) to function as the determiner (25) and the display (21) has been installed. The smartphone (92) functioning as the determiner (25) determines the condition of the hydraulic oil based on the determination image (50), and displays the result of determination on the display of the smartphone (92). In this variation, the display of the smartphone (92) serves as the display (21).

### -Second Variation-

In the turbidity determination device (10) according to the first and second embodiments, the determiner (25) may determine the condition of the hydraulic oil by what is called machine learning.

In the turbidity determination device (10) according to this variation, the memory device (27) of the determiner (25) has a trained model recorded thereon. This trained model is generated by machine learning using a large number of determination images (50) targeting hydraulic oil in various conditions as input data and using the condition of the hydraulic oil corresponding to the determination images (50) as training data.

The determiner (25) according to this variation determines whether the degree of turbidity of the hydraulic oil corresponds to "substantially no turbidity", "low turbidity", or "high turbidity" by inputting the determination images (50) obtained by the camera (35) to the trained model. If the degree of turbidity of the hydraulic oil corresponds to the "high turbidity", the determiner (25) determines whether the cause of the turbidity of the hydraulic oil is "contamination with water" or "contamination with solids."

While the embodiments and variations thereof have been described above, it will be understood that various changes in form and details may be made without departing from the spirit and scope of the claims. The elements according to the embodiments, the variations thereof, and the other embodiments may be combined and replaced with each other. The ordinal numbers such as "first" and "second" in the description and claims are used to distinguish the terms to which these expressions are given, and do not limit the number and order of the terms.

### INDUSTRIAL APPLICABILITY

As described above, the present disclosure is useful for a turbidity determination device and a turbidity determination system that determine the degree of turbidity of hydraulic oil.

### DESCRIPTION OF REFERENCE CHARACTERS

- 10: Turbidity Determination Device
- 15: Turbidity Determination System
- 25: Determiner
- 31: Partition Member
- 35: Camera (Imager)
- 36: Light Source
- 36a: First Light Source
- 36b: Second Light Source
- 40: Imaging Target Member
- 43: Through Hole
- 50: Determination Image
- 51: Bright Section
- 52: Dark Section
- 56: First Region
- 57: Second Region
- 71: Case
- 73: Intermediate Member
- 73a: First Side Surface
- 73b: Second Side Surface
- 74: Oil Passage
- 75a: First Joint Member
- 75b: Second Joint Member

## Claims

1. A turbidity determination device (10) for determining turbidity of hydraulic oil of hydraulic equipment, the turbidity determination device (10) comprising:
an imaging target member (40) that forms a bright section (51) and a dark section (52);
an imager (35) spaced apart from the imaging target member (40) so that the hydraulic oil is present therebetween, and configured to obtain an image of the imaging target member (40) as a determination image (50); and
a determiner (25) configured to perform a turbidity determination operation of determining a degree of turbidity of the hydraulic oil based on an intensity difference between the bright section (51) and the dark section (52) in the determination image (50) obtained by the imager (35).

2. The turbidity determination device of claim 1, wherein
in the turbidity determination operation, the determiner (25) determines that the hydraulic oil has a higher degree of turbidity as the intensity difference between the bright section (51) and the dark section (52) in the determination image (50) decreases.

3. The turbidity determination device of claim 1 or 2, wherein
the turbidity determination operation is an operation of determining, by the determiner (25), the degree of turbidity of the hydraulic oil by comparing the intensity difference between the bright section (51) and the dark section (52) in the determination image (50) with a reference intensity difference.

4. The turbidity determination device of claim 3, wherein the reference intensity difference is the intensity difference between the bright section (51) and the dark section (52) in the determination image (50) obtained by the imager (35) in a state where the hydraulic oil without turbidity is present between the imaging target member (40) and the imager (35).

5. The turbidity determination device of claim 3 or 4, wherein
the determiner (25):
performs a color determination operation of determining a color of the hydraulic oil based on the determination image (50); and
compares, in the turbidity determination operation, the reference intensity difference corresponding to the color of the hydraulic oil determined in the color determination operation with the intensity difference between the bright section (51) and the dark section (52) in the determination image (50).

6. The turbidity determination device of claim 5, wherein
a part of the determination image (50) including only the bright section (51) is a first region (56), and
the color determination operation is an operation of determining, by the determiner (25), the color of the hydraulic oil based on the first region (56) of the determination image (50).

7. The turbidity determination device of any one of claims 1 to 6, wherein
the imaging target member (40) forms a plurality of bright sections (51), each bright section (51) identical to the bright section (51), and a plurality of dark sections (52), each dark section (52) identical to the dark section (52),
a region of the determination image (50) including the plurality of bright sections (51) and the plurality of dark sections (52) is a second region (57), and
in the turbidity determination operation, the determiner (25) determines the degree of turbidity of the hydraulic oil based on a difference between a maximum value of intensity values of the plurality of bright sections (51) and a minimum value of intensity values of the plurality of dark sections (52) in the second region (57).

8. The turbidity determination device of any one of claims 1 to 6, wherein
the determiner (25) performs a cause determination operation of determining a cause of the turbidity of the hydraulic oil.

9. The turbidity determination device of claim 8, wherein
a region of the determination image (50) including both the bright section (51) and the dark section (52) is a second region (57), and
the cause determination operation is an operation of determining, by the determiner (25), the cause of the turbidity of the hydraulic oil based on an average value of intensity values in the second region (57) of the determination image (50).

10. The turbidity determination device of claim 9, wherein
the imaging target member (40) forms a plurality of bright sections (51), each bright section (51) identical to the bright section (51), and a plurality of dark sections (52), each dark section (52) identical to the dark section (52), and
the second region (57) is a region of the determination image (50) including one or more of the plurality of bright sections (51) and one or more of the plurality of dark sections (52).

11. The turbidity determination device of claim 9 or 10, wherein
the cause determination operation is an operation of determining, by the determiner (25), the cause of the turbidity of the hydraulic oil by comparing the average of the intensity values in the second region (57) of the determination image (50) with a reference intensity value.

12. The turbidity determination device of claim 11, wherein
the reference intensity value is an intensity value of the bright section (51) in the determination image (50) obtained by the imager (35) in a state where the hydraulic oil without turbidity is present between the imaging target member (40) and the imager (35).

13. The turbidity determination device of claim 11 or 12, wherein
in the cause determination operation, the determiner (25) determines that the cause of the turbidity of the hydraulic oil is contamination of the hydraulic oil with water when the average value of the intensity values in the second region (57) of the determination image (50) is greater than the reference intensity value.

14. The turbidity determination device of any one of claims 11 to 13,
wherein
in the cause determination operation, the determiner (25) determines that the cause of the turbidity of the hydraulic oil is contamination of the hydraulic oil with solid particles when the average value of the intensity values in the second region of the determination image (50) is smaller than the reference intensity value.

15. The turbidity determination device of any one of claims 1 to 14, wherein
the imaging target member (40) has a through hole (43) open in a surface facing the imager (35),
a section of the imaging target member (40) other than the through hole (43) forms the bright section (51), and the through hole (43) forms the dark section (52).

16. The turbidity determination device of claim 15, wherein
the imaging target member (40) has a plurality of through holes (43), each through hole (43) identical to the through hole (43).

17. The turbidity determination device of claim 15 or 16, wherein
the imaging target member (40) is white.

18. The turbidity determination device of any one of claims 1 to 17, wherein
the imaging target member (40) is fixed relative to the imager (35).

19. The turbidity determination device of claim 18, further comprising:
a mesh-shaped partition member (31) surrounding a space (32) between the imaging target member (40) and the imager (35).

20. The turbidity determination device of any one of claims 1 to 14, further comprising:
an intermediate member (73) disposed between the imaging target member (40) and the imager (35), made of a transparent material, and having therein an oil passage (74) through which the hydraulic oil flows.

21. The turbidity determination device of claim 20, wherein
the intermediate member (73) has a first side surface (73a) and a second side surface (73b),
each of the first side surface (73a) and the second side surface (73b) is a flat surface,
the first side surface (73a) and the second side surface (73b) are parallel to each other,
the intermediate member (73) has the oil passage (74) between the first side surface (73a) and the second side surface (73b),
the imaging target member (40) is in contact with the first side surface (73a) of the intermediate member (73), and
the imager (35) is opposed to the second side surface (73b) of the intermediate member (73).

22. The turbidity determination device of claim 20 or 21, further comprising:
a first joint member (75a) communicating with one end of the oil passage (74) and connected to an oil pipe (63) through which the hydraulic oil flows; and
a second joint member (75b) communicating with the other end of the oil passage (74) and connected to the oil pipe (63).

23. The turbidity determination device of any one of claims 20 to 22, further comprising:
a case (71) housing the imaging target member (40), the imager (35), and the intermediate member (73).

24. The turbidity determination device of claim 23, further comprising:
a light source (36) housed in the case (71) and configured to emit light, wherein
the case (71) is made of a material that transmits no light.

25. The turbidity determination device of claim 24, wherein
the oil passage (74) of the intermediate member (73) is a linear passage,
the light source (36) includes a first light source (36a) and a second light source (36b), and
the first light source (36a), the imager (35), and the second light source (36b) are aligned sequentially in a direction in which the oil passage (74) extends.

26. A turbidity determination system (15) for determining turbidity of hydraulic oil of hydraulic equipment, the turbidity determination system (15) comprising:
an imaging target member (40) that forms a bright section (51) and a dark section (52);
an imager (35) spaced apart from the imaging target member (40) so that the hydraulic oil is present therebetween, and configured to obtain an image of the imaging target member (40) as a determination image (50); and
a determiner (25) configured to perform a turbidity determination operation of determining a degree of turbidity of the hydraulic oil based on an intensity difference between the bright section (51) and the dark section (52) in the determination image (50) obtained by the imager (35).
